(19) Europäisches Patentamt / European Patent Office / Office européen des brevets

(11) **EP 4 660 901 A2**

(12) **EUROPEAN PATENT APPLICATION**

(43) Date of publication:
**10.12.2025** Bulletin 2025/50

(21) Application number: 25211327.9

(22) Date of filing: **17.08.2017**

(51) International Patent Classification (IPC):
*G06N 10/70* *(2022.01)*

(52) Cooperative Patent Classification (CPC):
**G06N 10/20; G06N 10/70**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 17.08.2016 US 201662376386 P
23.08.2016 US 201662378218 P
31.08.2016 US 201662382253 P
08.09.2016 US 201662385245 P
27.06.2017 US 201715634983
28.06.2017 US 201715636376
28.06.2017 US 201715636457

(62) Document number(s) of the earlier application(s) in accordance with Art. 76 EPC:
**17758734.2 / 3 500 984**

(71) Applicant: **Microsoft Technology Licensing, LLC Redmond, WA 98052 (US)**

(72) Inventors:
• **HASTINGS, Matthew**
  **Redmond, 98052 (US)**
• **FREEDMAN, Michael**
  **Redmond, 98052 (US)**
• **NAYAK, Chetan**
  **Redmond, 98052 (US)**
• **LUTCHYN, Roman**
  **Redmond, 98052 (US)**
• **KARZIG, Torsten**
  **Redmond, 98052 (US)**
• **BONDERSON, Parsa**
  **Redmond, 98052 (US)**

(74) Representative: **CMS Cameron McKenna Nabarro Olswang LLP**
**Cannon Place**
**78 Cannon Street**
**London EC4N 6AF (GB)**

Remarks:
This application was filed on 27-10-2025 as a divisional application to the application mentioned under INID code 62.

(54) **QUANTUM COMPUTING METHODS AND DEVICES FOR MAJORANA QUBITS**

(57)     Among the embodiments disclosed herein are example methods for generating all Clifford gates for a system of Majorana Tetron qubits (quasiparticle poisoning protected) given the ability to perform certain 4 Majorana zero mode measurements. Also disclosed herein are example designs for scalable quantum computing architectures that enable the methods for generating the Clifford gates, as well as other operations on the states of MZMs. These designs are configured in such a way as to allow the generation of all the Clifford gates with topological protection and non-Clifford gates (e.g. a $\pi/8$-phase gate) without topological protection, thereby producing a computationally universal gate set. Several possible realizations of these architectures are disclosed.

FIG. 4

S-wave Superconductor ("s-wave")
½ Shell Topological Wire or P-wave Superconductor ("Top")
X Majorana Zero Mode (MZM)
Gated Semiconductor Wire ("sc")
Quantum Dot

EP 4 660 901 A2

**Description**

**CROSS REFERENCE TO RELATED APPLICATIONS**

This application claims the benefit of U.S. Provisional Application No. 62/376,386, entitled "MEASURING AND MANIPULATING MAJORANA QUASIPARTICLE STATES USING THE STARK EFFECT" filed on August 17, 2016; U.S. Provisional Application No. 62/378,218, entitled "MEASURING AND MANIPULATING STATES OF NON-ABELIAN QUASIPARTICLES VIA QUANTUM DOT HYBRIDIZATION ENERGY SHIFTS" filed on August 23, 2016; U.S. Provisional Application No. 62/382,253, entitled "QUANTUM COMPUTING DEVICES WITH MAJORANA HEXON QUBITS" filed on August 31, 2016; and U.S. Provisional Application No. 62/385,245, entitled "QUANTUM COMPUTING METHODS AND DEVICES FOR MAJORANA QUAD QUBITS" filed on September 8, 2016, all of which are hereby incorporated herein by reference in their entirety.

This application is also a continuation-in-part of U.S. Nonprovisional Application No. 15/634,983, entitled "MEASURING AND MANIPULATING STATES OF NON-ABELIAN QUASIPARTICLES VIA QUANTUM DOT HYBRIDIZATION ENERGY SHIFTS" filed on June 27, 2017, and U.S. Nonprovisional Application No. 15/636,376, entitled "QUANTUM COMPUTING DEVICES WITH MAJORANA HEXON QUBITS" filed on June 28, 2017, which are hereby incorporated herein by reference in their entirety.

This application also claim priority to U.S. Nonprovisional Application No. 15/636,457, entitled "QUANTUM COMPUTING METHODS AND DEVICES FOR MAJORANA TETRON QUBITS" filed on June 28, 2017, which: (a) claims the benefit of U.S. Provisional Application No. 62/376,386, entitled "MEASURING AND MANIPULATING MAJORANA QUASIPARTICLE STATES USING THE STARK EFFECT" filed on August 17, 2016; U.S. Provisional Application No. 62/378,218, entitled "MEASURING AND MANIPULATING STATES OF NON-ABELIAN QUASIPARTICLES VIA QUANTUM DOT HYBRIDIZATION ENERGY SHIFTS" filed on August 23, 2016; U.S. Provisional Application No. 62/382,253, entitled "QUANTUM COMPUTING DEVICES WITH MAJORANA HEXON QUBITS" filed on August 31, 2016; and U.S. Provisional Application No. 62/385,245, entitled "QUANTUM COMPUTING METHODS AND DEVICES FOR MAJORANA QUAD QUBITS" filed on September 8, 2016; and (b) U.S. Nonprovisional Application No. 15/634,983, entitled "MEASURING AND MANIPULATING STATES OF NON-ABELIAN QUASIPARTICLES VIA QUANTUM DOT HYBRIDIZATION ENERGY SHIFTS" filed on June 27, 2017, and U.S. Nonprovisional Application No. 15/636,376, entitled "QUANTUM COMPUTING DEVICES WITH MAJORANA HEXON QUBITS" filed on June 28, 2017, which are hereby incorporated herein by reference in their entirety.

**FIELD**

This application relates generally to quantum computers. More specifically, the application concerns topologically protected quantum circuits.

**SUMMARY**

Among the embodiments disclosed herein are example methods for generating all Clifford gates for a system of Majorana Tetron qubits (quasiparticle poisoning protected) given the ability to perform certain 4 Majorana zero mode (MZM) measurements. Also disclosed herein are example designs for scalable quantum computing architectures that enable the methods for generating the Clifford gates, as well as other operations on the states of MZMs. These designs are configured in such a way as to allow the generation of all the Clifford gates with topological protection and non-Clifford gates (e.g., a $\pi/8$-phase gate) without topological protection, thereby producing a computationally universal gate set. Several possible realizations of these architectures are disclosed.

The example hardware designs disclosed herein can be scaled to arbitrarily many qubits. Further, in certain embodiments, the hardware designs allow only a specific, restricted set of measurements (restricted both in terms of which measurements are possible and in terms of which pairs of qubits can be measured). The methods for generating Clifford gates disclosed herein enable universality with only these restricted measurements. Among the various aspects of the disclosed methods are one or more of: a change of Pauli frames to avoid performing Hadamards; creation of $Y$ standards with state injection to make $S$ gates; distillation of $Y$ standards if only vertical $ZZ$ and horizontal $XX$ measurements are available; and/or sublattice arrangement of qubits to ensure that ancillas are available as needed (this last aspect is to overcome the restriction on which pairs of qubits can be measured, while the other aspects are to overcome which measurements can be performed). The combination of these techniques has not been considered and changes to the techniques are needed to accommodate all the restrictions; for example, only a limited set of Pauli frame changes are possible in this setting so $Y$ standards are also needed; the $Y$ standards must be implemented using only this restricted set; and only specific distillation protocols can be used due to the restriction on available measurements.

The disclosed methods can be implemented, at least in part, as computer-executable instructions (software) stored on one or more computer-readable media (storage devices or memory devices) and executable by one or more processors. The processors can be classical computer processors that are used as part of the system that controls, monitors, and/or reads out results from a quantum device (e.g., a quantum computer).

## BRIEF DESCRIPTION OF THE DRAWINGS

Figure 1 is a schematic block diagram of an example linear Majorana Tetron qubit device.

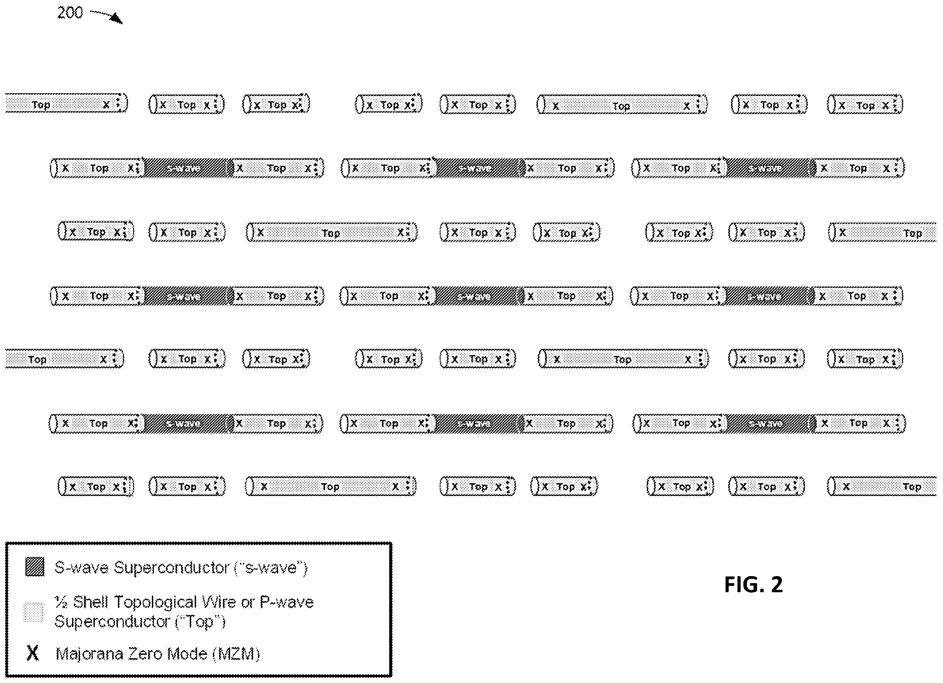

Figure 2 is a schematic block diagram illustrating example fabrication steps for linear Majorana Tetron qubit device.

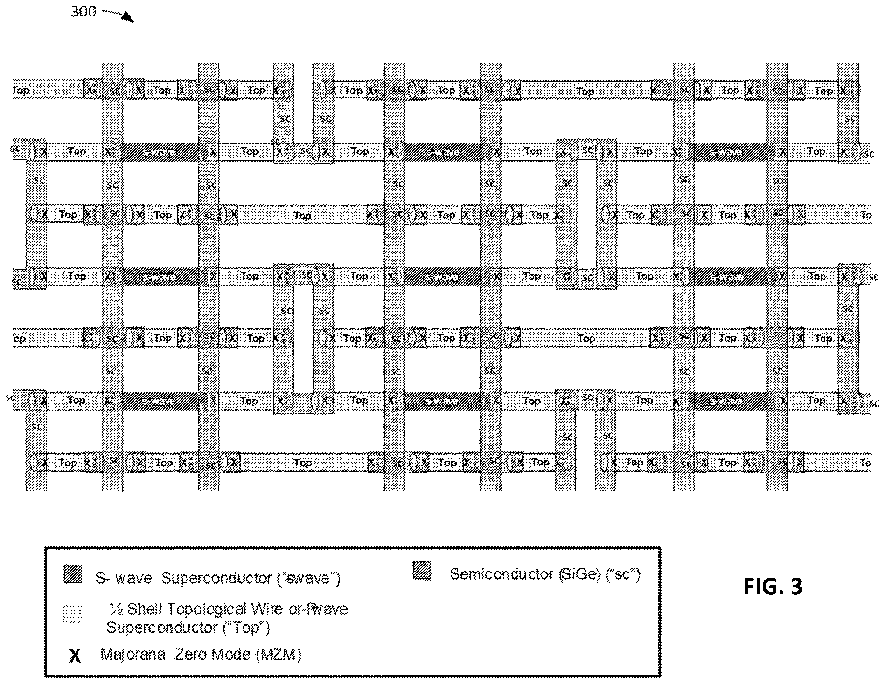

Figure 3 is a schematic block diagram illustrating example fabrication steps for linear Majorana Tetron qubit device.
Figure 4 is a schematic block diagram illustrating an example network of two-sided Majorana Tetron qubits.
Figure 5 is a schematic block diagram of an exampled controlled NOT circuit.
Figure 6 is a schematic block diagram of a quantum device in accordance with embodiments of the disclosed technology.
Figure 7 is a graph showing the dependence of the four lowest energy eigenvalues (measured in units of $t$) vs. $\delta$ for the **even** parity ground state degeneracy splitting for an example configuration discussed herein.
Figure 8 is a graph showing the dependence of the four lowest energy eigenvalues (measured in units of $t$) vs. $\delta$ for the **odd** parity degenerate ground states for an example configuration discussed herein.
Figure 9 is a graph showing the lowest eigenvalues as a function of the gate charge offset $\delta_{dot}$ for **even** joint parity for an example configuration discussed herein.
Figure 10 is a graph showing the lowest eigenvalues as a function of the gate charge offset $\delta_{dot}$ for **odd** joint parity for an example configuration discussed herein.
Figure 11 is a graph showing the relative difference in quantum capacitances $v_Q$ for even and odd joint parity states as a function of t for an example configuration discussed herein.
Figure 12 is a schematic layout of another example device for joint parity measurement.
Figure 13 is a schematic layout of yet another example device for joint parity measurement.
Figure 14 is a flowchart for operating a quantum system in accordance with embodiments of the disclosed technology.
Figure 15 is another flowchart for operating a quantum system in accordance with embodiments of the disclosed technology.

## DETAILED DESCRIPTION

### I. GENERAL CONSIDERATIONS

Disclosed herein are representative embodiments of methods, apparatus, and systems for topological quantum devices, and in particular for topologic qubits as can be used in a topological quantum computer. The disclosed methods, apparatus, and systems should not be construed as limiting in any way. Instead, the present disclosure is directed toward all novel and nonobvious features and aspects of the various disclosed embodiments, alone or in various combinations and subcombinations with one another. Furthermore, any features or aspects of the disclosed embodiments can be used alone or in various combinations and subcombinations with one another. For example, one or more method acts from one embodiment can be used with one or more method acts from another embodiment and vice versa. The disclosed methods, apparatus, and systems are not limited to any specific aspect or feature or combination thereof, nor do the disclosed embodiments require that any one or more specific advantages be present or problems be solved.

Although the operations of some of the disclosed methods are described in a particular, sequential order for convenient presentation, it should be understood that this manner of description encompasses rearrangement, unless a particular ordering is required by specific language set forth below. For example, operations described sequentially may in some cases be rearranged or performed concurrently. Moreover, for the sake of simplicity, the attached figures may not show the various ways in which the disclosed methods can be used in conjunction with other methods.

Various alternatives to the examples described herein are possible. For example, some of the methods described herein can be altered by changing the ordering of the method acts described, by splitting, repeating, or omitting certain method acts, etc. The various aspects of the disclosed technology can be used in combination or separately. Different embodiments use one or more of the described innovations. Some of the innovations described herein address one or more of the problems noted herein. Typically, a given technique/tool does not solve all such problems.

As used in this application and in the claims, the singular forms "a," "an," and "the" include the plural forms unless the context clearly dictates otherwise. Additionally, the term "includes" means "comprises." Further, as used herein, the term "and/or" means any one item or combination of any items in the phrase.

**II. MAJORANA TETRON QUBIT**

Systems with MZMs are often referred to as "topological" or "topologically protected," but, more precisely, they are "symmetry protected topological," as detailed in Phys. Rev. B 87, 195451 (2013) [arXiv:1212.6395]. In particular, their topological protection is based on fermion parity symmetry, meaning the system's fermion parity must be preserved in order to manifest topological protection of the states encoded nonlocally in the MZMs. Consequently, MZM systems are potentially vulnerable to stray electrons entering MZMs from outside the system - a quasiparticle poisoning. Such events constitute errors for quantum information encoded in the (nonlocal) fermion parities of MZMs. In particular, they take qubits out of the computational subspace, since they flip the fermion parities associated with the MZMs. Hence, it is desirable to protect MZM systems used for quantum computation from quasiparticle poisoning.

Certain example embodiments disclosed herein are systems that comprise mesoscopic superconducting islands that each host 4 Majorana zero modes (MZMs), a unit that is collectively referred to herein as a "Majorana Tetron qubit" (also known as a 'Majorana Quad qubit"). When the charging energy $E_c$ of a superconducting island is sufficiently large, it provides the contained MZMs protection from quasiparticle poisoning. Four is the smallest number of MZMs that supports a single computational qubit, which is encoded in the nonlocal (topological) state space of the MZMs - the joint fermionic parity of pairs of the MZMs.

This disclosure discloses methods for generating all n-qubit Clifford operations with topological protection, using joint parity measurements of 4 MZMs, two from one Majorana Tetron qubit and two from another.

It has been proposed (as detailed in Preskill's notes: http://www.theory.caltech.edu/ preskill/ph219/chap5-15.pdf) that single qubit Clifford gates together with the ability to make an entangling Clifford measurement between adjacent pairs of qubits yields the ability to generate all n-qubit Clifford gates. However, the geometry of practical designs involving MZMs on superconducting islands demands an analysis of which sparse sets of operations suffice to generate all Clifford operation, and how efficiently they can do so.

In particular, exploring possible geometries for MZMs on an island while minding the fact that MZMs are most easily produced at the ends of wires that are parallel to a fixed magnetic field direction (as discussed in Phys. Rev. B 93, 235434 (2016) [arXiv:1509.02675]), one finds that it is not possible to arrange the system such that all local fermion parity measurements of pairs of MZMs can be achieved using planar arrays of quantum dots. Similarly, only certain combinations of 4 MZMs with two from one island and two from another can have their joint parity measured using planar arrays of quantum dots.

Disclosed herein are examples of a general protocol for building up the full Clifford group from 4 MZM measurements and the careful use of ancillary qubits, with specific sets of possible measurements which may be dictated by the mentioned geometric/design constraints.

Also disclosed are two specific device designs involving "linear Majorana Tetron qubits" and "2-Sided Majorana Tetron qubits," respectively, which enable the generation of all Clifford operations. In the case of linear Majorana Tetron qubits, an adequate number of 4 MZM measurements are available to implement all Clifford operations. In the case of 2-Sided Majorana Tetron qubits, fewer 4 MZM operations are available, but there are enough supplementary 2 MZM measurements to nonetheless generate all Clifford gates. In both cases, efficiency is enhanced by exploiting available 2 MZM measurements, which are not strictly necessary for generating the Clifford gates.

The Clifford gates by themselves do not form a computationally universal gate set, but that supplementing the Clifford gates with a non-Clifford 1-qubit gate, e.g. the $\pi/8$-phase gate yields a computationally universal gate set. Such a gate can be produced from "magic states" by using measurements. Magic states can be generated in a number of ways for Majorana systems. The apparatuses used to perform measurements and/or tune couplings of MZMs mentioned in this disclosure can be used to generate magic states. (These magic states will not be topologically protected, so they will likely require some error-correction, e.g. by magic state distillation methods of Phys. Rev. A 71, 022316 (2005) [quant-ph/0403025]; if desired, one can also utilize cancelation schemes, such as those detailed in Phys. Rev. X 6, 31019 (2016)[arXiv:1511.05161] to improve the fidelity of magic state generation, before distillation.) Example methods of generating magic states with the described apparatus include the partial interferometry methods detailed in U.S. Patent #9256834: "Quantum Computers Having Partial Interferometric Quantum Gates" and the following discussion of performing measurements of non-Pauli operators. Thus, methods disclosed here, together with other protocols for producing magic states as disclosed herein, result in a design for universal quantum computation.

These and other embodiments will be explained in more detail in the description below. Additionally, the main body of U.S. Nonprovisional Application No. 15/634,983, entitled "MEASURING AND MANIPULATING STATES OF NON-ABELIAN QUASIPARTICLES VIA QUANTUM DOT HYBRIDIZATION ENERGY SHIFTS" filed on June 27, 2017 is provided below in "Appendix - Measuring and Manipulating States of Non-Abelian Quasiparticles via Quantum Dot Hybridization Energy Shifts".

## A. Summary of the gates

If some of the qubits in a quantum device can be used as ancillas, one only needs a very limited set of operations. As outlined in the "Universal Clifford Operations in Majorana Systems" section below, for a square lattice of qubits, it is enough to reach Clifford universality when having *XX, ZZ, XZ, ZX* measurements available between vertically adjacent qubits and ZZ measurements available between horizontally adjacent qubits. Together with approximate magic state injection this again leads to a universal quantum computer. One of the principles of the scheme is to use *ZZ* to define, copy and move an overall Z standard from a single qubit defined as $Z = +1$. With these *Z* standards, it is then possible to perform the Hadamard gate and CNOT in the vertical direction. Moreover, it is also possible to create *YY* measurements, which can then be used to define a *Y* standard (up to a $\pm$ sign). The latter allows one to perform phase gates *S* in the vertical direction, thus making a vertical column Clifford universal. This, in turn, allows one to conjugate each side of the horizontal ZZ measurements by any single-qubit Clifford operators, making the horizontal direction also Clifford universal. The ambiguity in the $\pm$ sign of the *Y* standard can be checked by preparing approximate magic states.

The scheme becomes more efficient if some Pauli standards are quickly available at a qubit, e.g. via single qubit measurements, without the need of transporting global standards through the square lattice.

It is even possible, although less efficient, to build a Clifford universal computer with only *XX* measurements in horizontal direction and *ZZ* measurements in vertical direction, combined with *X* and *Z* measurements on any single qubit. This example scheme relies on distilling *Y* standards prepared by approximate magic states or approximate *S* gates.

## B. 2-Sided Majorana Tetron Qubits

Example embodiments of the 2-sided Majorana Tetron qubit comprise two one-dimensional topological superconductors (1DTSs), e.g. half-shell Al-coated InAs nanowires, that are joined by a superconducting backbone. For purposes of this disclosure, the direction parallel to the 1DTSs will be called the horizontal direction, and the perpendicular direction will be called the vertical direction. (It should be understood that this orientation is by way of example only, as embodiments of the disclosed technology can have different orientations and/or rotations.) The backbone effectively joins the two 1DTSs to a single island. The separate charging energy of the 1DTSs is exponentially suppressed by the number of channels that connect the 1DTSs to the backbone. The typical number of channels in the superconductor of half-shell nanowire realizations can be larger than 1000.

The MZMs reside at the ends of the 1DTSs of length L. The remaining hybridization splitting between MZMs will be exponentially suppressed by exp($-L/\xi$), where $\xi$, is the effective coherence length in the 1DTSs. Note that for a short backbone, L not only controls the hybridization within a 1DTS, but also between MZMs of different 1DTSs, for a sufficiently insulating substrate.

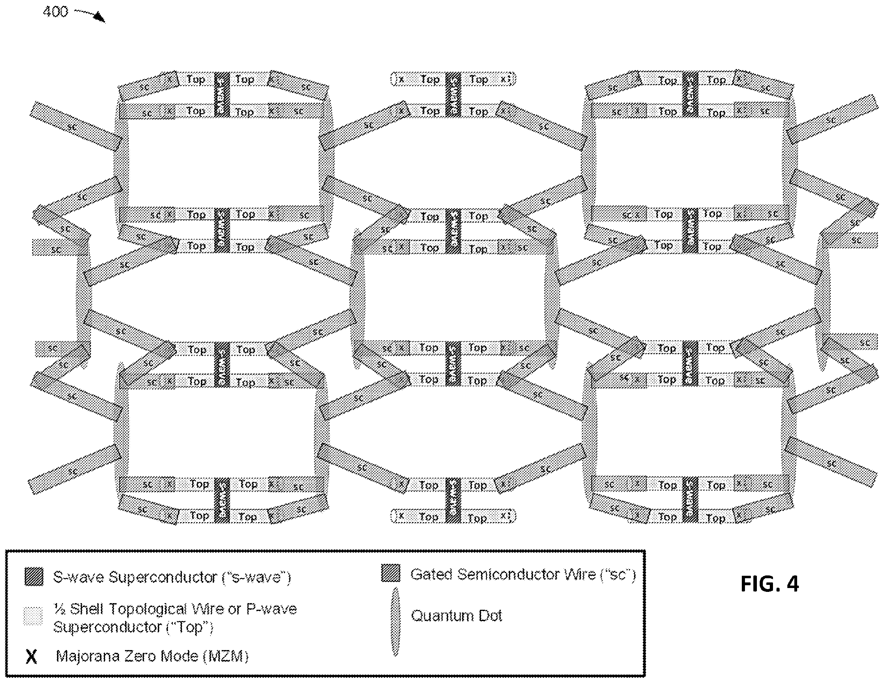

To minimize the unwanted hybridization, a 2-sided Majorana Tetron qubit can comprise relatively long 1DTSs that can be spaced closely in the vertical direction. This allows easy access for measurements of pairs of near-by MZMs on each side of the 2-sided Majorana Tetron qubit. In particular examples, a measurement scheme can be used where each of the ends of the 1DTSs is selectively connected to (and disconnected from) semiconducting quantum dots that extend perpendicular to the 1DTSs spanning the distance between two vertically adjacent Majorana Tetron Qubits, as shown in Figure 4. The connection can be tuned by depletion gates. An additional set of gates can split the quantum dot into separate smaller quantum dots. This setup then allows one to connect the two near-by MZMs on each side of a single 2-side Majorana Tetron qubit to a quantum dot. This enables one to perform a measurement of the parity of the near-by pair of MZMs, which corresponds to a Z measurement of the corresponding qubit. Entangling operations (joint parity measurements) between neighboring qubits (e.g., in the vertical direction) can be performed by coupling one MZM of the upper Majorana Tetron qubit and one MZM of the lower Majorana Tetron qubit to a left dot, while also coupling one MZM of the upper Majorana Tetron qubit and one MZM of the lower Majorana Tetron qubit to the right dot. The measurement is then performed by using the quantum dots as input and output for conductance measurements or directly probing the energy levels of the quantum dots.

Labeling the MZMs within a given Majorana Tetron qubit 1-4 from upper left to lower right, it is possible to entangle MZMs 3 and 4 of the upper Majorana Tetron qubit with MZMs 1 and 2 of the lower one, which corresponds to a *XX* measurement. Moreover, it is also possible to entangle MZMs 1 and 4 of the upper Majorana Tetron qubit with MZMs 3 and 2 of the lower one, which corresponds to a *YY* measurement; MZMs 3 and 4 of the upper Majorana Tetron qubit with MZMs 3 and 2 of the lower one, which corresponds to a *XY* measurement; and MZMs 1 and 4 of the upper Majorana Tetron qubit with MZMs 1 and 2 of the lower one, which corresponds to a *YX* measurement. In the horizontal direction, it is only possible to entangle MZMs 2 and 4 of a left Majorana Tetron qubit with MZMs 1 and 3 of a right Majorana Tetron qubit, which corresponds to a *ZZ* measurement.

In summary, the 2-sided Majorana Tetron qubit design (at least) allows for any one or more (e.g., all) of the following measurements:

- single qubit: $Z$

- vertical entangling: $XX, XY, YX, YY$

- horizontal entangling: $ZZ$

With the results discussed in the "Universal Clifford Operations in Majorana Systems" section below, the above gate set is also Clifford universal (the same arguments hold, the analogy becomes explicit when rotating, e.g. $Y \to Z$). It is however less efficient than the case of the linear Majorana Tetron qubit that is discussed in the next section. Due to the absence of some single qubit projections, either the $X$ or $Y$ standard needs to be defined using a reference qubit and applying $XX$ or $YY$ to distribute and copy that standard through the vertical column.

### C. Linear Majorana Tetron Qubits

Example embodiments of the linear Majorana Tetron qubit comprise a relatively long 1DTS (of length L), which is partitioned into two topological superconducting regions that are separated by one normal (s-wave) superconducting region. The normal superconducting region can be created from a long 1DTS by gating. Since gating does not affect the superconducting part, there is still a superconducting backbone present that connects the two topological superconducting regions, effectively forming a one-dimensional island. (In a realization of half-shell wires, the superconducting backbone would be the superconducting shell that is present throughout the entire half shell wire of length L.) In order for the Majorana states at the end of the topological superconducting regions to be zero modes, the topological superconducting regions as well as the normal superconducting regions should be sufficiently long compared to the respective coherence lengths in these regions, e.g., $L_{top} \gg (\xi_{top}$ and $L_{normal} \gg \xi_{normal}$.

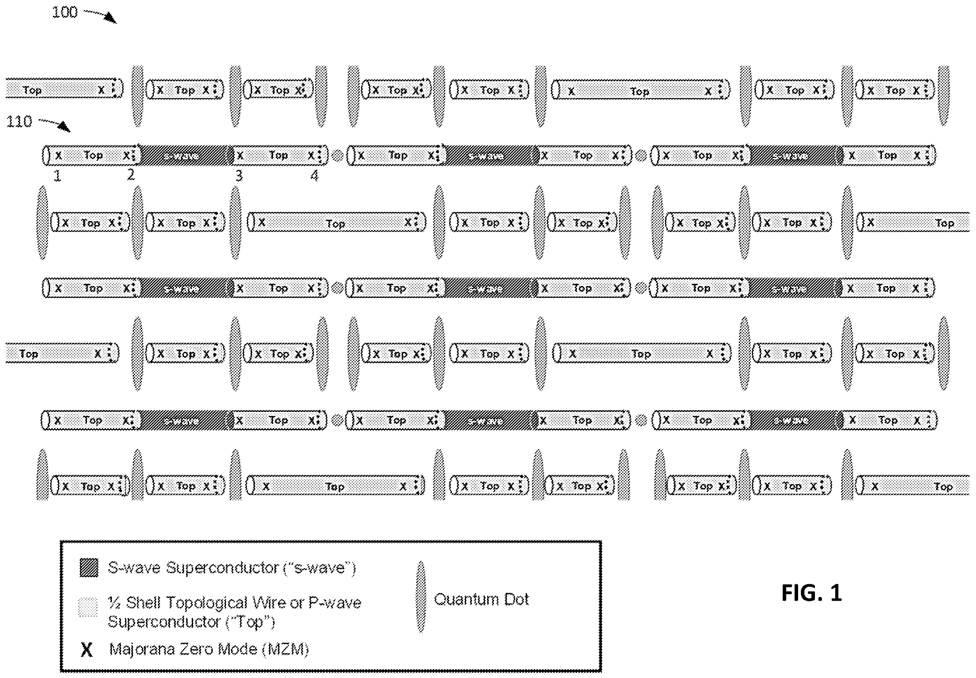

Due to the linear layout of the design, there are no pairs of MZMs that are not separated by at least $L_{top}$ or $L_{normal}$. In this sense, measurements cannot be performed by coupling near-by MZMs. Instead, measurements can be performed using reference arms of sufficient length. One possible device design (see Figure 1) uses reference arms of length $L_{top}$, $L_{normal}$, and $L_{top} + L_{normal}$, which together allow measurements of the following pairs of MZMs (with MZMs of a given linear Majorana Tetron qubit (such as example Majorana Tetron qubit 110) labeled 1-4 from left to right): (1,2), (1,3), (2,3), and (3,4)). These operations allow for $X, Y,$ and Z measurements of the qubit.

Additionally, this design enables the following 4 MZM measurements between two vertically adjacent linear Majorana Tetron qubits (two MZMs from each qubit). MZMs 3 and 4 of one qubit can be entangled with MZMs 3 and 4 of the other qubit, enabling a ZZ measurement on the pair of qubits. MZMs 3 and 4 of one qubit can be entangled with MZMs 2 and 4 of the other qubit, enabling a ZY measurement. MZMs 2 and 3 of one qubit can be entangled with MZMs 2 and 3 of the other qubit, enabling a $XX$ measurement on the pair of qubits. MZMs 2 and 3 of one qubit can be entangled with MZMs 2 and 4 of the other qubit, enabling a $XY$ measurement on the pair of qubits. MZMs 2 and 4 of one qubit can be entangled with MZMs 2 and 4 of the other qubit, enabling a $YY$ measurement on the pair of qubits.

In the horizontal direction, using at most a single reference arm of length $2L_{top}$, one can perform a 4 MZM measurement between two horizontally adjacent linear Majorana Tetron qubits, as MZMs 3 and 4 of the left qubit can be entangled with MZMs 1 and 2 of the right qubit, enabling a ZZ measurement on the pair of qubits. Using multiple reference arms, the horizontal direction allows for all entangling Pauli-Pauli measurements. In particular implementations, the design of Figure 1 does not include additional reference arms, but the read out electrons pass through a chain of multiple reference arms (e.g., up to 5 for an $XX$ measurement) in the course of the measurement. The latter would lead to a reduced visibility of the measurement.

In summary, the linear Majorana Tetron qubit designs allow (at least) for any one or more (e.g., all) of the following measurements:

- single qubit: $X, Y, Z$

- vertical entangling: $ZZ, ZY, YZ, XX, XY, YX, YY$

- horizontal entangling: at least $ZZ$

With the results discussed in the "Universal Clifford Operations in Majorana Systems" section below, the example device design described herein is therefore efficient in creating Clifford universality, since all Pauli standards and a large number of entangling gates are readily available (note that every second qubit still needs to be an ancilla to perform CNOT gates).

III. QUANTUM COMPUTING DEVICE DESIGN CONSIDERATIONS

Several designs for assembling the two types of Majorana Tetron qubits into scalable quantum computing devices have been disclosed herein and illustrated in the accompanying figures. As explained, the architectures of tetrons are topological qubits composed of four MZMs. Four is the smallest number of MZMs for which a sector of fixed total fermion parity supports a qubit, e.g., a two-dimensional Hilbert space. The absence of the extra ancillary pair of MZMs that are present in hexon designs results in two notable differences. The first is that one has only two main tetron designs; the tetron analog of the one-sided hexon design cannot be scaled into a two-dimensional array, as each qubit can only connect to its vertically adjacent neighbors. The second difference is that one is not able to generate topologically protected single qubit Clifford gates via operations acting on only one tetron. Instead, the Clifford gates are generated either by joint parity measurements on a pair of tetron qubits or by "Pauli frame changes." In the following section, it is shown how the various designs disclosed herein can be used to perform the desired gates using a limited set of measurements

*1. Quantum information basics*

Consider a system of qubits arranged in a plane in a square lattice, with each qubit labeled by its integer horizontal and vertical coordinates in the lattice. Assume that one has the ability to make a limited set of measurements that are called the elementary operations: between any pair of qubits $j$ and $k$ separated by a displacement $(0, \pm1)$, one can make measurements of the operators $Y_j Y_k$, $Z_j Z_k$, $X_j X_k$, $X_j Z_k$, and $Z_j X_k$; between any pair of qubits $j$ and $k$ separated by a displacement $(\pm1,0)$, one can make measurements of either the operator $Z_j Z_k$ or $Y_j Y_k$ (either one suffices). Assume also that one can make single qubit measurements of the operators $X_j$, $Y_k$, and $Z_l$.

Here, it is explained how this set of measurements provides a Clifford-complete set of operations for this system, up to Pauli frame changes. Subsequently, it is explained how a smaller set of measurements may generate Cilfford completeness by creating "standards," which removes the need for the single qubit measurements and the vertical $Y_j Y_k$ measurements. In a final reduction, it is shown that Clifford completeness may be attained even if the only available operations are vertical $X_j X_k$ measurements and horizontal $Z_j Z_k$ measurements. In the basic architectures utilizing these methods, the qubits are broken into a "checkerboard" arrangement, using one color as data qubits and one as ancillary qubits. That is, a qubit is designated as a data qubit when the sum of its coordinates is even, and as an ancillary qubit when the sum of its coordinates is odd.

*Pauli Frame Changes*- Pauli frame changes (see, e.g., E. Knill, Quantum computing with realistically noisy devices, Nature (London) 434, 39 (2005)) refers to the idea of not performing certain single qubit Clifford gates such as $X, Z,$ and $H$ in a quantum circuit, but instead modifying subsequent measurements accordingly. The idea is that, given a sequence composed of single qubit operators $X, Z,$ and $H,$ and single-qubit Pauli measurements, one can classically track the total single qubit operation and perform the appropriately conjugated measurements. Thus, for a sequence such as: measure $Z_j Z_k$, apply $H_k$, measure $Z_k Z_l$, apply $X_k$, and measure $Z_j Z_k$, one can commute the operators $X$ and $H$ through the measurements by appropriately changing what measurements one performs. Using $Z_k Z_l H_k = H_k X_k Z l$ and $Z_j Z_k X_k H_k = -X_k H_k Z_j X_k$, one finds that this sequence of operations is equivalent to the sequence: measure $Z_j Z_k$, measure $X_k Z_l$, measure $-Z_j X_k$, and apply $X_k H_k$. The final single qubit Clifford gates do not need to be performed if they follow all measurements in the circuit.

One can also commute the single qubit Clifford gates through CNOT gates. Since magic state injection is performed using CNOT gates, single qubit Clifford gates are not necessary even when the circuit includes T gates, where

$$T \equiv \begin{pmatrix} 1 & 0 \\ 0 & e^{i\pi/4} \end{pmatrix}. \qquad (1)$$

The effect of Pauli frame changes is to permute the set of two-qubit measurements. This may change the set of available measurements if the set of elementary operations does not include all two-qubit measurements. For this reason, Pauli frame changes are avoided that correspond to commuting the Clifford phase gate

$$S \equiv \begin{pmatrix} 1 & 0 \\ 0 & i \end{pmatrix} \qquad (2)$$

through other operations. This allows the set of available vertical measurements needed to remain fixed throughout the computation.

As specific operations are described that are built out of the elementary measurements, it will sometimes be said that one can perform an operation "up to $\{X, Z, H\}$" or "up to $\{X, Z\}$," describing the possible frame change on the qubits. The particular frame change that is implemented is determined by the measurement outcomes. An operation up to $\{X, Z\}$ may map $Z \to \pm Z$ and $X \to \pm X$ (with the mapping on $Y$ determined by the mapping of $X$ and $Z$). An operation up to $\{X, Z, H\}$ may additionally map $Z \to \pm X$ and $X \to \pm Z$.

*Vertical Teleportation*- Using measurements $X_k X_l$ and $Z_k Z_l$ between a pair of qubits with displacement $(0, \pm 1)$, one can create an EPR pair of the qubits $k$ and $l$. A further pair of measurements $X_j X_k$ and $Z_j Z_k$ will teleport the state of qubit $j$ to qubit $l$. This teleportation is up to $\{X, Z\}$ on qubit $l$.

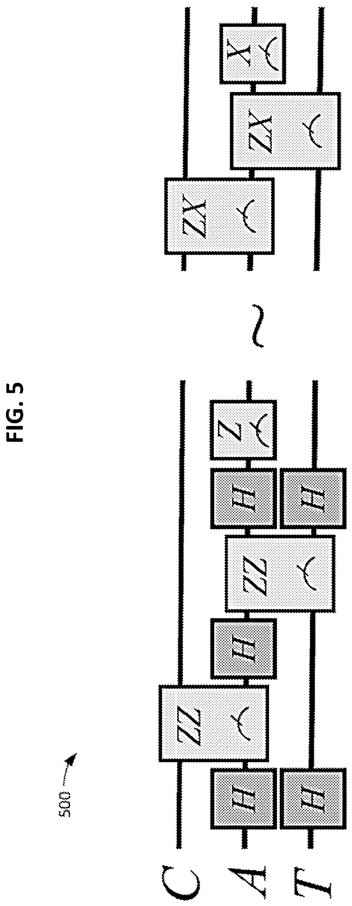

*Vertical CNOT and Swap*- One can also apply a CNOT gate, up to $\{X, Z\}$, on two qubits separated by $(0, \pm 2)$, e.g., two data qubits separated vertically by one ancillary qubit in between them. For this, one can use the left circuit of Figure 5, where the control, ancillary, and target qubits are labeled C, A, and T, respectively.

More specifically, Figure 5 shows two equivalent circuits implementing the CNOT gate. As noted, the control, ancillary, and target qubits are labeled $C$, $A$, and $T$, respectively. Gates labeled $H$ are Hadamard gates, the other boxes correspond to one and two qubit measurements as indicated by the corresponding Pauli operators. The left circuit implements a CNOT up to $\{X, Z\}$ on qubits $C$ and $T$. As explained herein, the Hadamard operators can be commuted through to yield the simplified circuit shown on the right, up to $\{X, Z, H\}$.

Qubit A is initialized in an eigenstate of $Z$. One takes qubits $C$ and $T$ to be on the even sublattice, separated in the vertical direction with A the ancillary qubit in between them. This circuit gives a CNOT up to $\{X, Z\}$ on qubits $C$ and $T$.

The Hadamard operators in this circuit can be commuted through the measurements to the end of the circuit, resulting in the CNOT gate up to $\{X, Z, H\}$. The resulting sequence of operations in the simplified circuit is: measure $Z_C X_A$, measure $Z_A X_T$, and measure $X_A$.

The ability to perform CNOT gates in both directions on a pair of qubits allows one to Swap the pair of qubits (through the application of three alternating CNOT gates). This allows arbitrary motion of the data qubits in the vertical direction.

*Hadamard Gate Without Pauli Frame Change and Single Qubit X Measurement*- The method of Pauli frame changes above is an efficient method to implement a single qubit Clifford gate, as no actual operations need to be performed on the qubits. However, switching between different Pauli frames may change the set of available operations. The Hadamard gate does not affect the set of available operations in the vertical direction. Thus, if one only considers vertical measurements, one can perform Hadamard gates by frame changes. However, suppose that one wishes to perform a Hadamard gate followed by a measurement of $Z_j Z_k$ of qubits separated by $(\pm 1, 0)$. In this case, the new frame requires a measurement of $Z_j X_k$, which is not an elementary operation for those qubits.

In order to overcome this, it will be shown how to perform a Hadamard gate while only utilizing Pauli frame changes that are up to $\{X, Z\}$, as such Pauli frame changes will leave the set of available horizontal operations unchanged. Let $\mathrm{Swap}_{jk}$ swap qubits $j$ and $k$. Consider the operation

$$U = \mathrm{Swap}_{jl} H_l \mathrm{Swap}_{jl} H_l, \qquad\qquad (3)$$

for a pair of data qubits $j$ and $l$ that are separated by $(0, \pm 2)$ (vertically nearest-neighbor data qubits with one ancillary qubit in between them). An implementation of $\mathrm{Swap}_{jl}$ is up to $\{X, Z\}$. Since $H_l$ appears twice in this operation, the net frame change in performing $U$ is still up to $\{X, Z\}$; that is, it will not interchange $X_k \leftrightarrow Z_k$. As an operator, $U = H_j H_l$ applies the Hadamard gate to each of the two qubits.

An alternative way to implement a Hadamard gate is to use the following variant of the vertical teleportation protocol. Use measurements $X_k Z_l$ and $Z_k X_l$ between a pair of qubits separated by $(0, \pm 1)$, e.g., one data qubit and one ancillary qubit, to create an EPR pair up to the Hadamard gate on $l$. Then measure $X_j X_k$ and $Z_j Z_k$ to teleport the state of qubit $j$ to qubit $l$ while performing a Hadamard on the encoded state. Since teleportation may be used to route qubits, this allows the Hadamard gate to be performed "for free" at the same time as a teleportation.

*Horizontal CNOT and Swap*- Using the method described above to generate a Hadamard gate without frame change, the horizontal measurements of $Z_j Z_k$ can be conjugated to become measurements of $Z_j X_k$ or $X_j X_k$. One can thereby obtain a CNOT gate acting on a pair of qubits separated by $(\pm 2, 0)$ by using only $Z_j Z_k$ measurements horizontally. If instead one has only $Y_j Y_k$ measurements horizontally, one can use an $S$ gate (an implementation of which is explained below) to conjugate them to become measurements of $X_j X_k$. Since a Swap is generated from three alternating CNOT gates, one now has the ability to perform horizontal Swaps of second nearest neighbor pairs of qubits, using the intermediate qubit as an ancillary qubit to facilitate the operation.

*S gate*- An S gate can be implemented without frame change by utilizing state injection of a +1 eigenstate of $Y$. Such a state can be produced by measuring a single qubit $Y$ operator.

Note that instead of implementing a standard state injection using unitary gates (e.g., a CNOT gate), a measurement-based injection is more tailored for the architectures disclosed herein. In particular, a shorter circuit for implementing an S gate (up to $Z$ gates on the source) is given by the sequence of operations: prepare an ancillary qubit in the +1 eigenstate of $Y$, measure the operator $ZX$, where $Z$ is on the data qubit and $X$ is on the ancillary qubit, and then measure $Z$ on the ancillary qubit.

*$Y_j Y_k$ Measurement*- One can measure $Y_j Y_k$ between any pair of qubits $j$ and $k$ that are separated by $(0, \pm 2)$ using only the other elementary operations, through the following sequence: apply a CNOT gate from $j$ to $k$, apply a Hadamard gate on qubit $j$, apply a CNOT gate from $j$ to $k$, measure $Z_k$, apply a CNOT gate from $j$ to $k$, apply a Hadamard gate on qubit $j$, and apply a CNOT gate from $j$ to $k$. One may verify that the result of this sequence of operations is equal to a measurement of $-Y_j Y_k$.

*Living without Single-Qubit Measurements: Using "Standards "*- If it is not possible to perform single-qubit measurements, but only two-qubit measurements, it is still possible to generate a Clifford complete set of operations. By measuring $X_j X_k$, $Y_j Y_k$, or $Z_j Z_k$, a qubit state that is an eigenvector of $X, Y,$ or $Z$ can be copied indefinitely. Such a qubit is referred to as a "standard."

To achieve Clifford completeness without single-qubit measurements, one can store standards in every data qubit with odd horizontal coordinate. The data qubits now have coordinates ($2n, 2m$) in the lattice, for $n, m$ $m \in \mathbb{Z}$ (there are now three ancillary qubits per data qubit). With this arrangement, one can perform single qubit measurements on qubits with even horizontal coordinate. In fact, which eigenstate of $X, Y,$ or $Z$ one chooses for the standard is arbitrary, as the choice has no effect on measurements, when restricting to Clifford operations. If magic state injection is performed, the choice of eigenstate used for the Y standard becomes important. In this case, magic state injection can be used to identify the choice of Y standard (see, e.g., J. Preskill, Lecture notes for physics 219: quantum computation, 2004).

*Restricted Two-Qubit Operations*- Now suppose that one can measure $X_j$ or $Z_j$ on any single qubit, but one can only perform the limited set of two-qubit measurements: $Z_j Z_k$ between a pair of vertically-separated qubits and $X_j X_k$ between a pair of horizontally-separated qubits. This is still sufficient to build a universal quantum computer if one can produce an approximate magic state. While this is not likely to be a practical architecture and all architectures described herein have more than this set of measurements, it is interesting that this restricted set of operations remains universal. The following discussion of operations will be up to $\{X, Z\}$.

Using the same circuit shown in Figure 5, one can perform a CNOT between two qubits separated by a displacement $(\pm 1, \pm 1)$. For example, to generate a CNOT gate with the $(0, 0)$ qubit as the control and the $(1, 1)$ qubit as the target, one can use the following sequence: prepare the ancillary qubit $A$ in an $X$ eigenstate, measure $Z_C Z_A$, and measure $X_A X_T$. Given the ability to perform CNOT gates, one can perform Swap. In the above example, the $(1, 1)$ qubit is a standard. Applying multiple Swap operations allows the data qubits to move arbitrarily within the data qubit sublattice while leaving the standards intact.

However, one does not yet have the ability to perform the full Pauli group with this restricted set, since one does not have the ability to perform the Hadamard gate. These gates cannot be implemented through Pauli frame changes as one has a smaller set of elementary operations. Suppose, however, that one could produce many $Y$ standards, either $Y = +1$ or $Y = -1$ eigenstates. Using this $Y$ standard and state injection, one can perform an $S$ gate. Once an $S$ gate is available, one can also measure $Y_j X_k$, $X_j Y_k$, and $Y_j Y_k$ between any two horizontally separated qubits. Thus, one has the ability to perform all the elementary operations described at the beginning of this section, but with $Y$ and $Z$ operators interchanged and horizontal and vertical directions interchanged. One therefore has operations that are Clifford complete up to $\{X, Z\}$.

If one can produce approximate $Y$ standards, one can distill them using methods similar to, but simpler than the methods of S. Bravyi and J. Haah, Magic state distillation with low overhead, Phys. Rev. A 86, 052329 (2012). For this, one can use any CSS code that allows transversal S gates, such as the 7-qubit code from D. Gottesman, Theory of fault-tolerant quantum computation, Phys. Rev. A 57, 127 (1998). Using a CSS code allows one to check the stabilizers of the code using only CNOT gates and measurement and preparation of qubits in $Z$ and $X$ eigenstates. It should be noted that one can generate $Y$ standards, for example, if one can generate an approximate $S$ gate. Of course, if one can generate approximate $T$ gates, then one can produce approximate $S = T^2$ gates. Similarly, if one can produce approximate magic states, one can use them to produce approximate $Y$ standards.

## IV. FURTHER REPRESENTATIVE EMBODIMENTS

This section describes various example representative embodiments of the disclosed technology. These embodiments should not be construed as limiting, as they can be modified in arrangement and detail without departing from the principles of the disclosed technology.

For instance, one example embodiment as described herein is a two-sided Majorana Tetron qubit, comprising: two topological superconducting nanowires, each of the topological superconducting nanowires having a respective first end at which a respective first Majorana zero mode resides and a respective second end, opposite the first respective end, where a respective second Majorana zero mode resides; and a superconducting backbone element connected to the two topological superconducting nanowires, the superconducting backbone element being located between the respective first ends and the respective second ends of the two topological superconductive nanowires.

In some example implementations, the superconducting backbone element is oriented transverse to the two topological superconducting nanowires. In further implementations, the two topological superconducting nanowires are half-shell topological wires or p-wave superconductors, and the superconducting backbone element is an s-wave superconductor. In certain implementations, the two topological superconducting nanowires are located on a superconducting island having a charging energy sufficient to prevent quasiparticle poisoning.

Further embodiments include a network that further comprises multiple instances of the two-sided Majorana Tetron qubit as described above. In example implementations of such embodiments, one or more neighboring instances of the linear Majorana Tetron qubit are selectively coupled to one another by one or more semiconductive wires having tunable depletion gates configured to provide quantum-dot couplings between the neighboring instances. Further, the one or more neighboring instances of the two-sided Majorana Tetron qubit are neighboring along a horizontal direction, a vertical direction, or both. Any of these embodiments can include couplings as shown in Figure 4 and/or to allow the measurements of 4 Majorana modes as described in the Universal Clifford Operations in Majorana Systems section.

Another embodiment as disclosed herein is a method comprising generating Clifford operations from measurements of four Majorana zero modes. In such embodiments, the Clifford operations can comprise all Clifford operations so as to provide a computationally universal gate set for a quantum device or quantum computer once augmented by an additional approximate rotation. In particular implementations, the four Majorana zero modes measured are resident in any of the two-sided Majorana Tetron qubits or networks as described above.

A further example embodiment as described herein is a linear Majorana Tetron qubit, comprising a topological superconducting nanowire partitioned into regions, including: two MZM topological superconducting regions, each having a respective first end at which a respective first Majorana zero mode resides and a respective second end, opposite the first respective end, where a respective second Majorana zero mode resides; and an s-wave superconducting region that separates the two MZM topological superconducting regions from one another.

In certain example implementations, the s-wave superconducting region is created by gating junctions between the two MZM topological superconducting regions and the s-wave superconducting region. In some examples, the topological superconducting nanowire is located on a superconducting island having a charging energy sufficient to prevent quasiparticle poisoning.

Further embodiments include a network that further comprises two or more instances of any of the linear Majorana Tetron qubits as described above. In some implementations, one or more neighboring instances of the linear Majorana Tetron qubit are selectively coupled to one another by semiconductive wires having tunable depletion gates configured to provide quantum-dot couplings between the neighboring instances. In certain implementations, the one or more neighboring instances of the linear Majorana Tetron qubit are neighboring along a horizontal direction, a vertical direction, or both. Some example networks further comprise one or more intermediate topological superconducting nanowires interposed between the two or more instances of the linear Majorana Tetron qubit, each of the one or more intermediate topological superconducting nanowires having a respective first end at which a respective first Majorana zero mode resides and a respective second end, opposite the first respective end, where a respective second Majorana zero mode resides. In some examples, the intermediate topological superconducting nanowires are coupled to the semiconductive wires.

Also disclosed herein are example methods for generating Clifford operations from measurements of four Majorana zero modes, wherein the four Majorana zero modes measured are resident in any of the linear Majorana Tetron qubits or networks as described above. In certain embodiments, the Clifford operations comprise all Clifford operations so as to provide a computationally universal gate set for a quantum device or quantum computer once augmented by an additional approximate rotation.

More generally, this application discloses example methods to produce an approximate rotation of a single qubit.

## V. APPENDIX - MEASURING AND MANIPULATING STATES OF NON-ABELIAN QUASIPARTICLES VIA QUANTUM DOT HYBRIDIZATION ENERGY SHIFTS

### Overview

Embodiments of the disclosed technology comprise methods and/or devices for performing measurements and/or manipulations of the collective state of a set of Majorana quasiparticles/Majorana zero modes (MZMs). Example methods/devices utilize the shift of the combined energy levels due to coupling multiple quantum systems (e.g., in a Stark-effect-like fashion).

The example methods can be used to perform measurements of the collective topological charge or fermion parity of a group of MZMs (e.g., a pair of MZMs or a group of 4 MZMs). The example devices can be utilized in any system supporting MZMs. In certain desirable embodiments, the technology is used in nanowire realizations of MZMs; accordingly, the disclosure and figures will reflect this focus though it should be understood that the disclosed technology is more generally applicable. The disclosed technology can also be used in two-dimensional realizations of Majorana nanowires, such as those described in J. Shabani et al., "Two-dimensional epitaxial superconductor-semiconductor heterostructures: A platform for topological superconducting networks," Phys. Rev. B 93, 155402 (2016)

One example method described in this application is compatible with methods that utilize charging energy to protect subsystems of MZMs from quasiparticle poisoning and methods that utilize parallel nanowire (avoiding issues regarding alignment with the magnetic field, which arise for example in T-junction geometry, as in Phys. Rev. B 88, 035121 (2013)), arXiv:1511.01127, and H. Suominen et al., "Scalable Majorana Devices," arxiv:1703.03699.

The measurement apparatus of certain embodiments described in this application can also be utilized to generate "magic states" that are not topologically protected and other states and operations beyond those that can be obtained using Clifford gates. This generally involves precise calibration and tuning (time-dependent) profiles of gates and couplings/tunneling amplitudes.

In one exemplary embodiment, the device comprises: superconducting islands hosting MZMs (e.g., using Majorana nanowires that are proximitized with the superconductor); quantum dots; gates that control (among other things) charge of superconducting islands, charge of quantum dots, and tunneling couplings between the quantum dots and the MZMs. Further embodiments include devices that can perform measurements of the system energy (e.g., resonators for reflectometry measurements of the quantum dots). In particular embodiments, turning on couplings between the quantum dots and MZMs induces an energy shift which is determined by state-dependent quantum charge fluctuations between two subsystems. Such an energy shift affects many observable quantities such as, for example, the charge of the quantum dots.

Embodiments of the disclosed technology comprise methods and/or devices for performing measurements and/or manipulations of the collective state of a set of Majorana quasiparticles/Majorana zero modes (MZMs). Example methods/devices utilize the shift of the combined energy levels due to coupling multiple quantum systems (e.g., in a Stark-effect-like fashion). The example methods can be used for performing measurements of the collective topological charge or fermion parity of a group of MZMs (e.g., a pair of MZMs or a group of 4 MZMs). The example devices can be utilized in any system supporting MZMs. In certain desirable embodiments, the technology is used in nanowire realizations of MZMs; accordingly, the disclosure and figures will reflect this focus though it should be understood that the disclosed technology is more generally applicable.

Measurement process

In accordance with certain example embodiments, during times when a measurement is not being performed, the couplings (tunneling amplitudes) $t_j$ ($j$ = 1, ..., 4) between the quantum dots and the MZMs are turned off. These couplings can be controlled, for example, using pinch-off gates. The measurement of the collective state of MZMs is initiated by turning on the couplings between the quantum dots and the corresponding MZMs to be measured (e.g., by changing the gate voltage of the pinch-off gates). Once the couplings are turned on, the energy levels of the two quantum dots will be affected. In particular, there will be a coupling of the two quantum dots with each other that is mediated by the Majorana system, resulting in hybridization of the quantum states. The hybridization energy $J$ depends on the joint parity $p$ of the four MZMs involved. In general, $J$ = a + $\beta p$, with system-dependent constants $\alpha$ and $\beta$, $p = -\gamma_1\gamma_2\gamma_3\gamma_4$. Measuring the hybridized states (e.g. by measuring the energy of the system) therefore measures the joint parity p of the MZMs.

The measurement of the hybridized states can be done by a suitable spectroscopy. One example of this is through the use of reflectometry. The idea is that a change in the hybridization changes the quantum capacitance of the double dot system, which is defined by the second derivative of the energy with respect to the gate voltages $V_{D1}$ or $V_{D2}$. In particular, when the system is tuned close to resonance of the two dots, the energy is very sensitive to changes in the gate voltage of one of the dots, making the system's quantum capacitance become appreciable. When sending an rf-signal through an inductor towards the gate (say $V_{D1}$), the corresponding LC circuit is changed through the quantum capacitance, which manifests in a change of the reflection of the rf-signal. The reflectometry measures this change in reflection. (See, e.g., Petersson et al, Nano Lett. 10, 2789 (2010); Colless et al, Phys. Rev. Lett. 110, 46805 (2013)). Since the quantum capacitance depends on the hybridization $J$ and, therefore, on the joint parity $p$, the reflectometry performs the desired projective measurement.

After the measurement of the hybridized states is performed, the couplings are turned off again. There is a small probability that the occupancy of the quantum dots will be different when the tunneling amplitudes are turned off at the end of the process described in the previous paragraph. This probability is suppressed by the charging energy, but it is not zero.

Various example methods may potentially be employed to minimize this probability of having the undesired quantum dot occupancy state (e.g., one could optimize the gate tuning profile controlling the couplings). If the occupancy of the dots changes from the initial value, then quasiparticle poisoning has occurred. However, one can determine when this potential quasiparticle poisoning has occurred and one can correct for this occurrence. For this, one can detect whether or not the quasiparticle poisoning has occurred by performing a measurement of the charge of the (decoupled) quantum dots. To recover from such an error (when it occurs), one can repeat the process of the joint parity measurement of the 4 MZMs:

for instance, one can turn on the same tunneling amplitudes between the quantum dots and the MZMs again, the hybridized states can be measured, the tunneling amplitudes can be turned off again, and then the occupancy of the dots can be measured to once again detect whether the system is in the desired state. If the occupancy of the dots returns to its initial value, then the process is complete; otherwise, the procedure can be repeated until it succeeds.

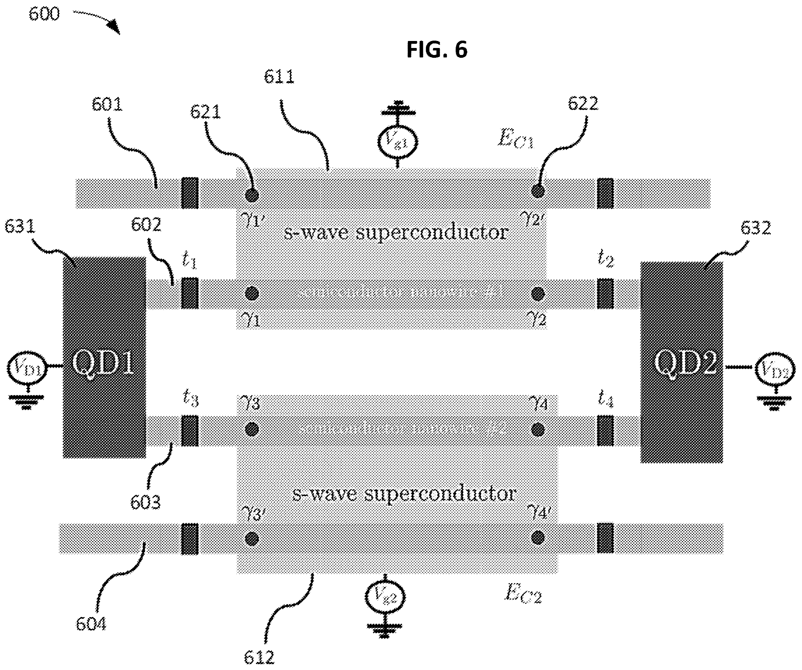

The scheme can be readily generalized to a measurement of the joint parities of any even number of MZMs. For a measurement of 2 MZMs, say $\gamma_1$ and $\gamma_2$, one would need to have a simple coupling of an ancillary pair of MZMs, $\gamma_3$ and $\gamma_4$, which have a fixed joint parity $i\gamma_3\gamma_4$ of known value. This can be induced by a coupling of $\gamma_3$ and $\gamma_4$ or by a charging energy. The measurement of $p = -\gamma_1\gamma_2\gamma_3\gamma_4$ then is equivalent to a measurement of the parity $i\gamma_1\gamma_2$. The coupled ancillary pair of MZMs and the two described quantum dots can also be combined into a single quantum dot. For joint parity measurement of 6 or more MZMs, the measurements can be performed similar to the presented scheme for measuring the joint parity of 4 MZMs by adding additional Majorana islands with finite charging energy (light blue regions labeled as "s-wave superconductor" in Figure 6). For example a setup for a measurement of the collective state of 8 MZMs could be realized by doubling the distance of the dots and adding two more islands in between.

**Utility for quantum computing**

The utility of example embodiments of the disclosed technology for quantum computation can be summarized as follows: Measurements of the state (topological charge or parity) of pairs of MZMs can generate all the topologically protected braiding operations. Further details on this topic can be found, for example, in U.S. Patent #8209279: "Measurement-Only Topological Quantum Computation" and papers Phys. Rev. Lett. 101, 010501 (2008) [arXiv:0802.0279] and Annals Phys. 324, 787-826 (2009) [arXiv:0808.1933].

It is known that, for MZMs, braiding operations alone generates a proper subset of the Clifford operations. For example, in the "standard encoding" of qubits, braiding of MZMs only generates the 1-qubit Clifford gates. It is also known that supplementing braiding operations with the ability to perform measurements of the state (joint parity) of 4 MZMs allows one to generate the full set of Clifford gates with topological protection. For example, measurement of 4 MZMs allows one to change between distinct encodings of qubits and denser encodings allow one to obtain 2-qubit entangling gates. Further details in this regard can be found in U.S. Patent #8620855: "Use of Topological Charge Measurements to Change Between Different Qubit Encodings."

It is known that the Clifford gates by themselves do not form a computationally universal gate set, but that supplementing the Clifford gates with a non-Clifford 1-qubit gate, e.g. the $\pi/8$-phase gate yields a computationally universal gate set. Such a gate can be produced from "magic states" by using measurements. Magic states can be generated in a number of ways for Majorana systems. The measurement apparatus described in this application can be used to generate magic states. (These magic states will not be topologically protected, so they will likely require some error-correction, e.g. by magic state distillation methods of Phys. Rev. A 71, 022316 (2005) [quant-ph/0403025]. If desired, one can also utilize cancellation schemes, such as those detailed in Phys. Rev. X 6, 31019 (2016)[arXiv:1511.05161] to improve the fidelity of magic state generation, before distillation.) Methods of generating magic states with example embodiments of the described apparatus include the partial interferometry methods detailed in U.S. Patent #9256834: "Quantum Computers Having Partial Interferometric Quantum Gates" and the following discussion of performing measurements of non-Pauli operators.

In the language of the encoded qubits, the parity measurements described above correspond to projections onto eigenstates of the Pauli operators or tensor products of Pauli operators (for multi-qubit measurements). The measurement scheme can be extended to measure superpositions of Pauli operators. For example, instead of projecting onto the $X$ or $Y$ Pauli operator one could project onto $P(\phi) = \cos(\phi)X + \sin(\phi)Y$. This can be implemented, for example, by having another MZM $\gamma_0$ from the upper island that is coupled to the quantum dot. The measurement of the dot hybridization then has the effect of measurement of the MZMs' state corresponding to (approximate) projections onto the eigenstates of $(\cos(\phi)\gamma_0 + \sin(\phi)\gamma_1)\gamma_2\gamma_3\gamma_4$. Fixing the parity of $\gamma_3$ and $\gamma_4$ (as previously discussed) will then equate this measurement with the desired measurement with respect to the eigenstates of $P(\phi)$. With $\phi = \pi/4$, this scheme would project onto a magic state. An exact projection is typically achieved through some fine tuning, so experimental implementations of this measurement scheme will generally have errors that are not topologically protected.

**Summary of Joint Parity Measurement through the Quantum Dot energy shift**

The Hamiltonian for the superconducting island $j$ is given by

$$H_{Cj} = E_{Cj}(Q_j - Q_{0,j})^2 + H_{\text{BCS}}$$

where $Q_{0,j}$ is controlled by the gate voltage $V_{gj}$ and $H_{\text{BCS}}$ is BCS Hamiltonian for the semiconductor-superconductor hybrid system. Further details of such systems can be found in Phys. Rev. Lett. 105, 077001 (2010) [arXiv:1002.4033] and Phys. Rev. Lett. 105, 177002 [arXiv:1003.1145]. The Hamiltonian for jth quantum dot (QD) reads $H_{QDj} = \Delta_j f_j^\dagger f_j$ with $\Delta_j$ being the energy splitting between even- and odd-charge states of the dot. Here $f_j^\dagger$ and $f_j$ are the creation and annihilation operators in the jth QD; $\Delta_j$ can be tuned using gate voltage $V_{QDj}$. The coupling between superconducting islands and QDs, in the low-energy approximation, acquires the following form (as described in Phys. Rev. Lett. 104, 056402 (2010)):

$$H = \sum_{j=1,3} t_j f_1^\dagger \gamma_j e^{-\phi_j/2} + \sum_{j=2,4} t_j f_2^\dagger \gamma_j e^{-\phi_j/2} + h.c.$$

where $\gamma_j$ is the self-conjugate Majorana operator, $t_j$ is the gate-tunable tunneling matrix element, and the operator $\phi_j$ is the conjugate operator to the island charge $Q_j$. Here, $\phi_1 = \phi_2$ and $\phi_3 = \phi_4$. The operator $e^{\mp i\phi_j/2}$ increases/decreases the charge of the superconducting island by one electron. In the limit $E_{Cj} \gg |t_{j1}|$, the charge on the islands is fixed by appropriately choosing the gate voltage $V_{gj}$. Henceforth, it is assumed that $Q_{O,1} = Q_{0,2} = 0$. In this case, the fluctuations of charge occur due to virtual exchange of electrons between the islands and QDs. In the spirit of the second-order perturbation theory, one can derive an effective low-energy Hamiltonian valid at the energy scale much smaller than $E_{Cj}$. Henceforth, it is assumed, for simplicity, that $E_{C1} = E_{C2} = E_C$. After the projection to the low-energy subspace, one finds

$$H = -\frac{|t_1|^2 + |t_3|^2}{2E_C} f_1^\dagger f_1 - \frac{|t_2|^2 + |t_4|^2}{2E_C} f_2^\dagger f_2 + \frac{i}{2}\left(\frac{t_1 t_2^*}{E_C}\hat{p}_1 + \frac{t_3 t_4^*}{E_C}\hat{p}_2\right) f_1^\dagger f_2 + h.c., \qquad (4)$$

where $\hat{p}_1 = i\gamma_1\gamma_2$ and $\hat{p}_2 = \gamma_3\gamma_4$. The spectrum of this Hamiltonian clearly depends on the joint parity $p = {}_{P1P2}$. Indeed, explicit calculation for $t_1 = t_3 = t_4 = |t|$ and $t_2 = |t|e^{i\alpha}$ yields the following eigenvalues for the system:

$$E_\pm = -\frac{2|t|^2}{E_C} \pm \frac{|t|^2}{E_C}\sqrt{2 + 2p\cos\alpha}. \qquad (5)$$

(The - energies correspond to the ground state and + to the excited state.) Thus, the measurement of the QD energy shift constitutes a joint parity measurement p = -$\gamma_1\gamma_2\gamma_3\gamma_4$. Further, more general, results are presented in T. Karzig et al., "Scalable Designs for Quasiparticle-Poisoning-Protected Topological Quantum Computation with Majorana Zero Modes," arXiv:1610.05289 (March 2017) and T. Karzig et al., "Scalable Designs for Quasiparticle-Poisoning-Protected Topological Quantum Computation with Majorana Zero Modes, "Phys. Rev. B 95, 235305 (2017).

**<u>Example Implementations</u>**

In this section, an example joint parity measurement scheme using Quantum Dots (QDs) is described with further technical detail. As will be explained, the coupling of the superconducting islands to QDs leads to a measurable shift of the energy levels due to the quantum charge fluctuations between two subsystems. It is further demonstrated that the effective low-energy Hamiltonian for the device such as that pictured in Figure 6 depends on the combined parity $\hat{P} = -\gamma_1\gamma_2\gamma_3\gamma_4$ when coupled to two quantum dots on both ends. By measuring the energy levels of the quantum dots, one can infer the eigenvalue of $\hat{P}$, an essential operation for Majorana-based topological quantum computing.

A. Overview of Example Scheme

Consider the device shown in schematic block diagram 600 of Figure 6. In Figure 6, superconducting islands 611, 612 correspond to s-wave superconductors with the corresponding SC phases $\phi_{1/2}$. Lines 601, 602, 603, 604 denote semiconducting nanowires proximitized by the superconductor. An in plane magnetic field allows one to tune the nanowire into a topological superconducting state with Majorana zero-energy modes at the opposite ends (shown as circles, such as circles 621, 622). Islands 631, 632 correspond to quantum dots which are coupled to the Majorana zero modes via gate-controlled barriers $t_j$. The charge on the islands and QDs can be tuned by the corresponding gate voltage $V_j$.
In Figure 6, superconducting islands 611, 612 host two (or more) semiconducting nanowires . The nanowires are tuned to the topological phase by adjusting the chemical potential and magnetic field so that the nanowire hosts a Majorana zero mode (MZM) per end. See R. M. Lutchyn, J. D. Sau, and S. Das Sarma, Phys. Rev. Lett. 105, 077001 (2010); Y. Oreg, G. Refael, and F. von Oppen, Phys. Rev. Lett. 105, 177002 (2010). The nanowires labeled #1 (601) and #2 (602) are coupled to the quantum dots 1 (631) and 2 (632) at either end. Each superconducting island has appreciable charging energy $E_{Cj} = e^2/2C_{\Sigma j}$, determined by the geometrical capacitance $C'_{\Sigma j}$ of the island (including the nanowires) to all other electrodes. The charge on the superconducting islands can be controlled by the gate voltage $V_{gj}$ (which determines the induced charge $Q_{gj}$). Therefore, the topological qubit comprising of superconducting islands is protected from unwanted quasiparticle tunneling (quasiparticle poisoning) by the charging energy. Indeed, at low temperature $T \ll E_C$, the probability of an excited state with an electron on the island is exponentially small ($\propto \exp(-E_C/T)$) and electron excursions to the island are only allowed for a short period of time determined by the quantum uncertainty principle $\tau \sim \hbar/E_C$. These quantum fluctuations are state dependent and, therefore, contain information about the state of a topological qubit.

## B. Theoretical Model

This subsection describes the theoretical model for the example scheme. The Hamiltonian for the superconducting island hosting semiconductor nanowires is given by

$$H_0 = \sum_{j=1,2} H_{\mathrm{BCS},j} + H_{\mathrm{C},j} \qquad (6)$$

where $H_{\mathrm{BCS},j}$ is the mean-field BCS Hamiltonian for the s-wave superconductor coupled to the nanowires. Due to the mesoscopic size of the island, there is a significant charging energy associated with it. The corresponding Hamiltonian reads

$$H_{\mathrm{C},j} = E_{C,j}(Q_{\mathrm{tot},j} - Q_{0,j})^2. \qquad (7)$$

The operator $Q_{\mathrm{tot},j}$ counts the combined nanowire-superconductor charge, and the offset charge $Q_{0,j}$ is tuned by changing the voltage applied to a superconducting island. In the low-energy approximation, one can project the system to the low-energy subspace (e.g. $\varepsilon \ll \Delta_0$ with $\Delta_0$ being the bulk gap of an s-wave superconductor). In this limit, one can represent the island as a collection of Kitaev wires (see A. Y. Kitaev, Physics-Uspekhi 44, 131 (2001)) having the same SC phase $\phi$ for each island. At the special point (dimerized limit), the Hamiltonians for the Majorana wire #1 and #2 are given by

$$H_1 = -\Delta_P \sum_{j=1}^{N-1} (c_j^\dagger - e^{i\phi_1} c_j)(c_{j+1} + e^{-i\phi_1} c_{j+1}^\dagger)$$

$$H_2 = -\Delta_P \sum_{j=1}^{N-1} (d_j^\dagger - e^{i\phi_2} d_j)(d_{j+1} + e^{-i\phi_2} d_{j+1}^\dagger) \qquad (8)$$

In the above, $c$, $c^\dagger$ correspond to fermion operators in wire #1, while $d$, $d^\dagger$ are the fermion operators for wire #2. Here $\Delta_P$ is the induced p-wave gap. The superconducting phase of the top (bottom) wire is $\phi_1$ ($\phi_2$), and the operator $e^{i\phi_1}$ ($e^{i\phi_2}$) adds a Cooper pair to the top (bottom) island.

One can define operators that commute with $H_{1/2}$:

$$\Gamma_1^\dagger = c_1^\dagger + e^{i\phi_1} c_1$$

$$\Gamma_2^\dagger = i(c_N^\dagger - e^{i\phi_1} c_N)$$

$$\Gamma_3^\dagger = d_1^\dagger + e^{i\phi_2} d_1$$

$$\Gamma_4^\dagger = i(d_N^\dagger - e^{i\phi_2} d_N) \qquad (9)$$

(see for example:

$$[H_c, \Gamma_1^\dagger] = -\Delta[(c_1^\dagger - e^{i\phi_1}c_1)(c_2 + e^{-i\phi_1}c_2^\dagger), c_1^\dagger + e^{i\phi_1}c_1]$$

$$= -\Delta\left((c_1^\dagger - e^{i\phi_1}c_1)[c_2 + e^{-i\phi_1}c_2^\dagger, c_1^\dagger + e^{i\phi_1}c_1]\right.$$

$$\left. + [c_1^\dagger - e^{i\phi_1}c_1, c_1^\dagger + e^{i\phi_1}c_1](c_2 + e^{-i\phi_2}c_2^\dagger)\right) \qquad (10)$$

$$= \Delta\{c_1^\dagger - e^{i\phi_1}c_1, c_1^\dagger + e^{i\phi_1}c_1\}\left(c_2 + e^{-i\phi_1}c_2^\dagger\right)$$

$$= \Delta\left(-e^{i\phi_1} + e^{i\phi_1}\right)\left(c_2 + e^{-i\phi_1}c_2^\dagger\right) = 0).$$

The operator $\Gamma_{1/2}^\dagger$ adds a charge to the island hosting wire #1, while $\Gamma_{3/4}^\dagger$ adds a charge to the island hosting wire #2. Thus, $\Gamma_i^\dagger$ does not commute with the number-conserving Hamiltonian $H_{C,1/2}$. However, the charge-neutral combination

$$\Gamma_1^\dagger\Gamma_2 = e^{-i\phi}\Gamma_1^\dagger\Gamma_2^\dagger = i(e^{i\phi_1}c_1^\dagger c_N^\dagger - e^{i\phi_1}c_1 c_N + c_1 c_N^\dagger - c_1^\dagger c_N) \qquad (11)$$

does commute with $Q_{tot,1}$ (and similarly for $\Gamma_3^\dagger\Gamma_4$ and $Q_{tot,2}$). Furthermore, as $i\Gamma_1^\dagger\Gamma_2$ squares to one and anticommutes with $\Gamma_{1/2}$, it counts the parity of wire #1. Similarly, $i\Gamma_3^\dagger\Gamma_4$ counts the parity of wire #2. We denote these operators by

$$\hat{p}_1 = i\Gamma_1^\dagger\Gamma_2 \qquad\qquad \hat{p}_2 = i\Gamma_3^\dagger\Gamma_4. \qquad (12)$$

Finally, note that $\gamma_i = e^{-i\phi_i/2}\Gamma_i^\dagger = \gamma_i^\dagger$ are the usual Majorana operators.

The eigenstates of $H_0$ have well defined total charge (wire plus superconductor) and parity for each island. Assume that $Q_{0,1/2}$ is adjusted such that the ground state has total charges $Q_1$ and $Q_2$. The five lowest energy states are given by

$$|0\rangle = \left|Q_1, Q_2; p_1 = p_1', p_2 = p_2'\right\rangle$$

$$|1\rangle = |Q_1 + 1, Q_2; -p_1, p_2\rangle = \Gamma_1^\dagger|0\rangle$$

$$|2\rangle = |Q_1 - 1, Q_2; -p_1, p_2\rangle = \Gamma_1|0\rangle \qquad (13)$$

$$|3\rangle = |Q_1, Q_2 + 1; p_1, -p_2\rangle = \Gamma_3^\dagger|0\rangle$$

$$|4\rangle = |Q_1, Q_2 - 1; p_1, -p_2\rangle = \Gamma_3|0\rangle.$$

For the moment, one can denote the energy levels as $H_0|i\rangle = E_i|i\rangle$.

One can rewrite the eigenstates in terms of the $\Gamma_{2/4}$ operators as follows:

$$-\hat{p}_1|1\rangle = \left(i\Gamma_1^\dagger\Gamma_2\right)|1\rangle = \left(i\Gamma_1^\dagger\Gamma_2\right)\Gamma_1^\dagger|0\rangle$$

$$= -i\Gamma_1^\dagger\Gamma_1^\dagger\Gamma_2|0\rangle = -ie^{i\phi_1}\Gamma_2|0\rangle = -i\Gamma_2^\dagger|0\rangle$$

$$\Rightarrow |1\rangle = ip_1\Gamma_2^\dagger|0\rangle \qquad (14)$$

Similar manipulations imply

$$-p_1 |2\rangle = -i\Gamma_2 |0\rangle \qquad\qquad \Rightarrow |2\rangle = ip_1\Gamma_2 |0\rangle \qquad\qquad (15)$$

$$-p_2 |3\rangle = -i\Gamma_4^\dagger |0\rangle \qquad\qquad \Rightarrow |3\rangle = ip_2\Gamma_4^\dagger |0\rangle \qquad\qquad (16)$$

$$-p_2 |4\rangle = -i\Gamma_4 |0\rangle \qquad\qquad \Rightarrow |4\rangle = ip_2\Gamma_4 |0\rangle . \qquad\qquad (17)$$

Now add quantum dot Hamiltonian and the coupling between the QDs and the ends of the nanowires (*i.e.* the tunneling Hamiltonian):

$$H_{\mathrm{dots}} = \sum_{i=1,2} \epsilon_i \left( f_i^\dagger f_i - \delta_{\mathrm{dot},i} \right)^2 \qquad\qquad (18)$$

$$H_{\mathrm{tunn}} = - \left( t_1 f_1^\dagger c_1 + t_2 f_2^\dagger c_N + t_3 f_1^\dagger d_1 + t_4 f_2^\dagger d_N + \mathrm{h.c.} \right) \qquad\qquad (19)$$

The operators $f_i$, $f_i^\dagger$ annihilate and create fermions in the left and right quantum dots. $\varepsilon_i$ are the charging energies of the QDs and $\delta_{\mathrm{dot},i}$ are the offset charges which we restrict to the interval $\delta_{\mathrm{dot},i} \in (0, 1)$ so that the relevant charge states are either $|0\rangle_{\mathrm{QD}}$ or $|1\rangle_{\mathrm{QD}}$. Thus, a basis for the quantum dot degrees of freedom is

$$|0\rangle_{\mathrm{QD}} = |n_1 = 0, n_2 = 0\rangle$$

$$|1\rangle_{\mathrm{QD}} = |n_1 = 1, n_2 = 0\rangle = f_1^\dagger |0\rangle_{\mathrm{QD}}$$

$$|2\rangle_{\mathrm{QD}} = |n_1 = 0, n_2 = 1\rangle = f_2^\dagger |0\rangle_{\mathrm{QD}} \qquad\qquad (20)$$

$$|3\rangle_{\mathrm{QD}} = |n_1 = 1, n_2 = 1\rangle = f_1^\dagger f_2^\dagger |0\rangle_{\mathrm{QD}} .$$

It is desirable to rewrite $H_{\mathrm{tunn}}$ in terms of the operators $\Gamma_i$, describing our low-energy subspace. This can be done using

$$c_1 \to \frac{1}{2}\Gamma_1 \qquad\qquad c_N \to \frac{i}{2}\Gamma_2 \qquad\qquad d_1 \to \frac{1}{2}\Gamma_3 \qquad\qquad d_N \to \frac{i}{2}\Gamma_4. \qquad (21)$$

After performing the projection described above, one can find the effective tunneling Hamiltonian:

$$H_{\mathrm{tunn}}^{\mathrm{eff}} = -\frac{1}{2} \left( t_1 f_1^\dagger \Gamma_1 + it_2 f_2^\dagger \Gamma_2 + t_3 f_1^\dagger \Gamma_3 + it_4 f_2^\dagger \Gamma_4 + \mathrm{h.c.} \right) . \qquad (22)$$

It is useful to establish what the non-zero matrix elements of the $\Gamma_i$ operators are. The basis defined in Eq. (13) is orthonormal, therefore the only non-zero matrix elements are

$$\langle 2| \Gamma_1 |0\rangle = 1 \qquad\qquad \langle 0| \Gamma_1 |1\rangle = 1 \qquad\qquad (23)$$

$$\langle 2| \Gamma_2 |0\rangle = -ip_1 \qquad\qquad \langle 0| \Gamma_2 |1\rangle = ip_1 \qquad\qquad (24)$$

$$\langle 4| \Gamma_3 |0\rangle = 1 \qquad\qquad \langle 0| \Gamma_3 |3\rangle = 1 \qquad\qquad (25)$$

$$\langle 4| \Gamma_4 |0\rangle = -ip_2 \qquad\qquad \langle 0| \Gamma_4 |3\rangle = ip_2 \qquad\qquad (26)$$

along with their hermitian conjugates. Importantly, one sees that certain matrix elements depend on the parity eigenvalues $p_1, p_2$.

One can also solve for the non-zero matrix elements in the quantum dot basis for the $f_i$ operators:

$$\langle 1| f_1^\dagger |0\rangle_{QD} = 1 \qquad\qquad \langle 3| f_1^\dagger |2\rangle_{QD} = 1$$

$$\langle 2| f_2^\dagger |0\rangle_{QD} = 1 \qquad\qquad \langle 3| f_2^\dagger |1\rangle_{QD} = -1$$

plus hermitian conjugates.

One can now write the effective tunneling Hamiltonian for the system shown in Figure 6 in this basis:

$$\begin{aligned}
H_{\text{tunn}}^{\text{eff}} &= -\frac{1}{2} \sum_{i,j} |i\rangle \langle i| \otimes |j\rangle \langle j|_{QD} \\
&\quad \times \left( t_1 f_1^\dagger \Gamma_1 + it_2 f_2^\dagger \Gamma_2 + t_3 f_1^\dagger \Gamma_3 + it_4 f_2^\dagger \Gamma_4 + h.c. \right) \\
&\quad \times \sum_{i',j'} |i'\rangle \langle i'| \otimes |j'\rangle \langle j'|_{QD} \\
&= -\frac{t_1}{2} \left(|2\rangle \langle 0| + |0\rangle \langle 1|\right) \otimes \left(|1\rangle \langle 0| + |3\rangle \langle 2|\right)_{QD} \\
&\quad - p_1 \frac{t_2}{2} \left(|2\rangle \langle 0| - |0\rangle \langle 1|\right) \otimes \left(|2\rangle \langle 0| - |3\rangle \langle 1|\right)_{QD} \\
&\quad - \frac{t_3}{2} \left(|4\rangle \langle 0| + |0\rangle \langle 3|\right) \otimes \left(|1\rangle \langle 0| + |3\rangle \langle 2|\right)_{QD} \\
&\quad - p_2 \frac{t_4}{2} \left(|4\rangle \langle 0| - |0\rangle \langle 3|\right) \otimes \left(|2\rangle \langle 0| - |3\rangle \langle 1|\right)_{QD} + h.c.
\end{aligned} \qquad (27)$$

In the above basis, the quantum dot Hamiltonian can be written as

$$H_{\text{dots}} = \mathbb{1} \otimes \sum_i E_{\text{dots},i} |i\rangle \langle i|_{QD} \qquad\qquad (28)$$

while the superconducting island Hamiltonian is

$$H_0 = \sum_i E_i |i\rangle \langle i| \otimes \mathbb{1}_{QD}. \qquad\qquad (29)$$

To be explicit,

$$E_\bullet = E_{C,1} \left(Q_1 - Q_{\bullet,1}\right)^2 + E_{C,2} \left(Q_2 - Q_{\bullet,2}\right)^2$$

$$E_1 = E_{C,1} \left(Q_1 + 1 - Q_{\bullet,1}\right)^2 + E_{C,2} \left(Q_2 - Q_{\bullet,2}\right)^2$$

$$E_2 = E_{C,1} \left(Q_1 - 1 - Q_{\bullet,1}\right)^2 + E_{C,2} \left(Q_2 - Q_{\bullet,2}\right)^2$$

$$E_3 = E_{C,1} \left(Q_1 - Q_{\bullet,1}\right)^2 + E_{C,2} \left(Q_2 + 1 - Q_{\bullet,2}\right)^2$$

$$E_4 = E_{C,1} \left(Q_1 - Q_{\bullet,1}\right)^2 + E_{C,2} \left(Q_2 - 1 - Q_{\bullet,2}\right)^2 \tag{30}$$

$$E_{\text{dots},\bullet} = \epsilon_1 \delta_{\text{dot},1}^2 + \epsilon_2 \delta_{\text{dot},2}^2$$

$$E_{\text{dots},1} = \epsilon_1 \left(1 - \delta_{\text{dot},1}\right)^2 + \epsilon_2 \delta_{\text{dot},2}^2$$

$$E_{\text{dots},2} = \epsilon_1 \delta_{\text{dot},1}^2 + \epsilon_2 \left(1 - \delta_{\text{dot},2}\right)^2$$

$$E_{\text{dots},3} = \epsilon_1 \left(1 - \delta_{\text{dot},1}\right)^2 + \epsilon_2 \left(1 - \delta_{\text{dot},2}\right)^2.$$

In this basis, the total Hamiltonian,

$$H_{\text{tot}} = H_{\text{tunn}}^{\text{eff}} + H_{\text{dots}} + H_0, \tag{31}$$

is a 20×20 Hermitian matrix that can be numerically diagonalized. In the next section, the results of the numerical diagonalization are discussed.

## C. Energy shift dependence on joint parity $P$

### 1. Symmetric limit

First, one can solve for the eigenvalues of Eq. (31) in the symmetric limit where the superconducting islands have equal charging energies, $E_{C,1} = E_{C,2} = E_C$, the tunnel couplings on the left (right) dots are the same, $t_1 = t_3 = t_L$ and $t_2 = t_4 = t_R$, the dots are tuned to the degeneracy point $\delta_{\text{dot},i} = 1/2$, and the offset charge on the islands has been tuned so that $Q_1 = Q_{0,1}$ and $Q_2 = Q_{0,2}$. The last assumption implies that $E_{i \neq 0} = E_C$ and $E_0 = \mathbf{0}$.

The four lowest eigenenergies of the full system are slightly shifted from zero due to the coupling between the quantum dots and the Majorana nanowires:

$$\varepsilon_0 = \varepsilon_1 = \frac{E_C}{2} \left(1 - \sqrt{1 + \frac{2}{E_C^2} \left(|t_L|^2 + 2|t_R|^2\right)}\right)$$

$$\varepsilon_2 = \frac{E_C}{2} \left(1 - \sqrt{1 + \frac{2}{E_C^2} \left(|t_L|^2 + |t_R|^2 + (1+p)\,|t_L||t_R|\right)}\right) \tag{32}$$

$$\varepsilon_3 = \frac{E_C}{2} \left(1 - \sqrt{1 + \frac{2}{E_C^2} \left(|t_L|^2 + |t_R|^2 - (1+p)\,|t_L||t_R|\right)}\right).$$

One may notice that the only parity dependence is on the product $p = p_1 p_2$. Thus, the measurement of the QD energy shift constitutes a joint parity measurement. However, this measurement does not allow one to determine the parity state of the individual wire #1 or wire #2. The lowest eigenvalues are consistent with the results presented above.

In the limit of weak tunneling (i.e. $\frac{|t_{L/R}|}{E_C} \ll 1$), the leading order of perturbation theory yields

$$\varepsilon_0 = \varepsilon_1 \approx -\frac{|t_L|^2 + |t_R|^2}{2E_C}$$

$$\varepsilon_2 \approx -\frac{|t_L|^2 + |t_R|^2 + (1+p)\,|t_L||t_R|}{2E_C} \qquad (33)$$

$$\varepsilon_3 \approx -\frac{|t_L|^2 + |t_R|^2 - (1+p)\,|t_L||t_R|}{2E_C}$$

To lowest order in $|t_{L/R}|/E_C$, when the parities are opposite ($p$ = -1) there are four degenerate ground state energies. When the parities are equal ($p$ = +1) the degeneracy is split into three energy levels, one of which is degenerate. These degeneracies, however, are accidental and are due to the choice of parameters made. Once one considers the most general theory with different $t_j$ and $E_{Cj}$ the degeneracies will be lifted. In any case, the conclusion is that it is possible to determine from the low energy spectrum whether the combined parity, $p$, is even or odd. This difference in energy can be detected using the standard energy-level spectroscopy techniques (e.g. probing DoS in the QD).

In the discussion above, the focus has been on the specific point when $Q_{1/2}$ = $Q_{0,1/2}$. This section will now investigate the spectrum away from this point and demonstrate that effect still persists (the energy of the full system still depends on the combined parity p). Let's define the detuning from this point as $Q_{1/2}$ = $Q_{0,1/2}$ - $\delta$, where $1 \gg \delta > 0$. The energies of $H_0$ are now give by

$$E_0 = E_C\delta^2,$$

$$E_1 = E_3 = E_C(1-\delta)^2, \qquad (34)$$

$$E_2 = E_4 = E_C(1+\delta)^2.$$

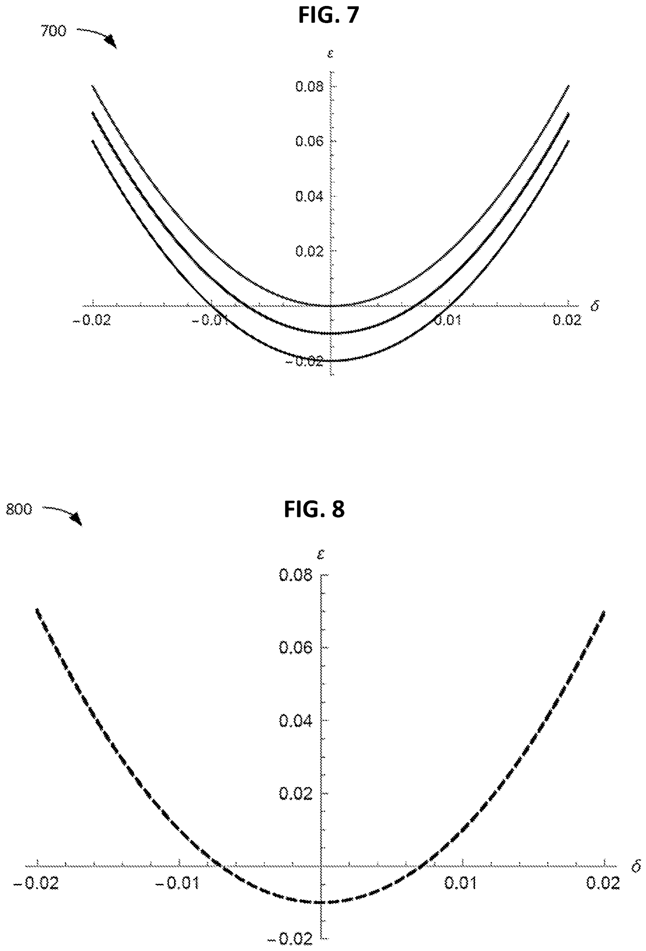

The analytical expression is not illuminating so we present numerical results instead. The plots of the four lowest eigenenergies vs $\delta$ are shown in Figures 7 and 8.

Figure 7 is a graph 700 showing the dependence of the four lowest energy eigenvalues (measured in units of t) vs. $\delta$ for the **even** parity ground state degeneracy splitting. Here $E_C$ = 100, $t_L$ = 1, $t_R$ = i, and $p$ = +1 (even parity). Note that at the degenerate point considered in the previous section, there are three distinct energies with the middle curve nearly two-fold degenerate (analogous to $\varepsilon_{0/1}$ in the previous section).

Figure 8 is a graph 800 showing the dependence of the four lowest energy eigenvalues (measured in units of t) vs. $\delta$ for the odd parity degenerate ground states. Here the parameters are the same as in Figure 7, but with $p$ = -1 (odd parity). Notice that all four energies are nearly degenerate.

*2. Quantum Dot gate voltage dependence of the energy shift*

In addition to energy-level spectroscopy, it will now be demonstrated that quantum capacitance of the system depends on the joint parity $p$. Consider the case when QD1, for example, is capacitively coupled to an LC resonator. The impedance of the system depends on the capacitance of the QD which is sensitive to quantum charge fluctuations in the dot. Quantum capacitance of the system is defined as the curvature of the energy with respect to the offset charge on the dot.

$$C_Q^{-1} = \frac{1}{e^2}\frac{\partial^2 E_{\mathrm{GS}}}{\partial^2 \delta_{\mathrm{dot}}}, \qquad (35)$$

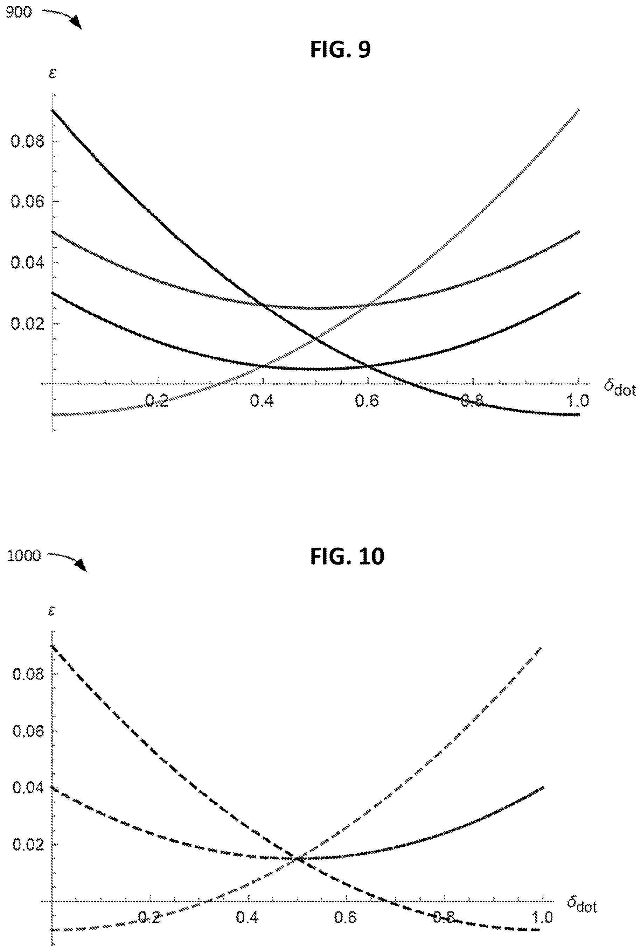

where $E_{\mathrm{GS}}$ is the ground-state energy of the system. The plots of the energy dependence on $\delta_{\mathrm{dot},1}$ for different parities are shown in Figures 9 and 10. As a measure of the QD capacitance change, consider the relative difference $v$, defined as

$$\nu_Q = \frac{C_Q(p=+1) - C_Q(p=-1)}{C_Q(p=+1) + C_Q(p=-1)} \qquad (36)$$

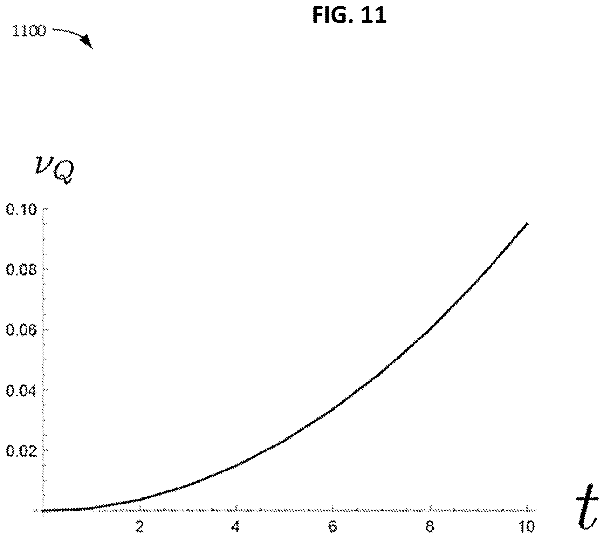

and plot it as a function of $t_R$ = $t_L$ = t, see Figures 11 Note that this method works for parameter regime when the ground-state energy is parity-dependent.

More specifically, Figure 9 is a graph 900 showing the lowest eigenvalues as a function of the gate charge offset

$\delta_{dot}$ for **even** joint parity. Here, the following parameters were used $\varepsilon_1 = \varepsilon_2 = 0.05$, $t_L = 1$, $t_R = l$, $E_C = 100$, $\delta = 0$, $p = +1$. Figure 10 is a graph 1000 showing the lowest eigenvalues as a function of the gate charge offset $\delta_{dot}$ for **odd** joint parity. Here, the following parameters were used $\varepsilon_1 = \varepsilon_2 = 0.05$, $t_L = 1$, $t_R = 1$, $E_C = 100$, $\delta = 0$, $p = -1$. Figure 11 is a graph 1100 showing the relative difference in quantum capacitances $v_Q$ for even and odd joint parity states as a function of $t$. Here we used the following parameters: $\varepsilon_1 = \varepsilon_2 = 500$, $t_L = 10$, $t_R = 101l$, $E_C = 100$, $\delta = 0$ and $\delta_{dot,1/2} = 0.5$.

## General Embodiments

The disclosed technology can be used as a basic building block for a Majorana-based quantum computer that is protected from quasiparticle errors (e.g., quasiparticle poisoning) by the charging energy of the superconducting islands (e.g., $E_Cj$). Further, gate voltages $V_gj$ allow one to control the charge on the superconducting islands. The embodiments disclosed herein include example methods for measuring joint parity $P$ of four Majorana zero modes ($P = \gamma_1\gamma_2\gamma_3\gamma_4$) using quantum dots (the quantum dot energy shift depends on the product of $\gamma_1\gamma_2\gamma_3\gamma_4$). Further, tunnel couplings $t_j$ are gate-tunable and, in certain embodiments, can be turned on or off on demand. Tunnel couplings $t_j$ and quantum dot gate voltages $V_Dj$ are used to decouple QDs from the topological qubit. The disclosed embodiments allow one to generate XX, ZZ, ZX and XZ spin couplings between the qubits.

As discussed and explained above, Figure 6 is a schematic layout 600 of an example device for joint parity measurement. The layout 600 can be used to generate ZZ couplings. In the layout 600, by measuring the energy shift in the dot, one can perform a measurement of the joint fermion parity $\gamma_1\gamma_2\gamma_3\gamma_4$. Using the following encoding for fermion parities $p_1 = i\gamma_1\gamma_2$, $p_1' = i\gamma_1\gamma_{2'}$, $p_2 = i\gamma_3\gamma_4$, and $p_{2'} = i\gamma_3\gamma_{4'}$, the aforementioned measurement is equivalent to $Z_1Z_2$ spin coupling.

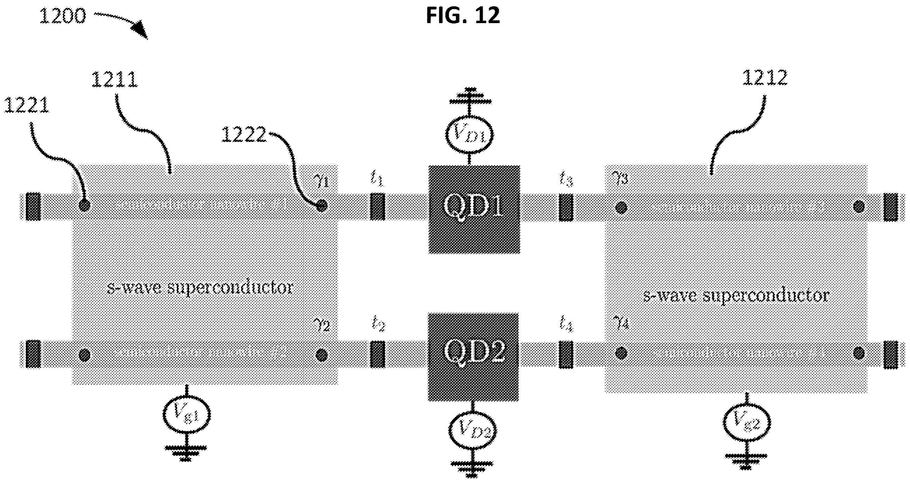

Figure 12 is a schematic layout 1200 of an example device for joint parity measurement. The layout 1200 can be used to generate XX couplings. In the layout 1200, superconducting islands 1211 and 1212 are characterized by the corresponding charging energies $E_{Cj} = (e^2)/(2C'_{\Sigma j})$ with $C'_{\Sigma j}$ being the geometric capacitance of the J-th island. Further, each island contains 4 Majorana zero modes (shown as circles, such as circles 1221, 1222). Quantum dots (QD1 and QD2) are assumed to have large charging energy as well. The charge on the islands and dots can be controlled via capacitively coupled gate electrodes. By measuring the energy shift in the dot, one can perform the measurement of the joint fermion parity $\gamma_1\gamma_2\gamma_3\gamma_4$. Using the following encoding for fermion parities $p_j = i\gamma_j\gamma_{j'}$ for $j = 1..4$ (which defines the z-basis for qubits), the aforementioned measurement is equivalent to $X_1X_2$ spin coupling.

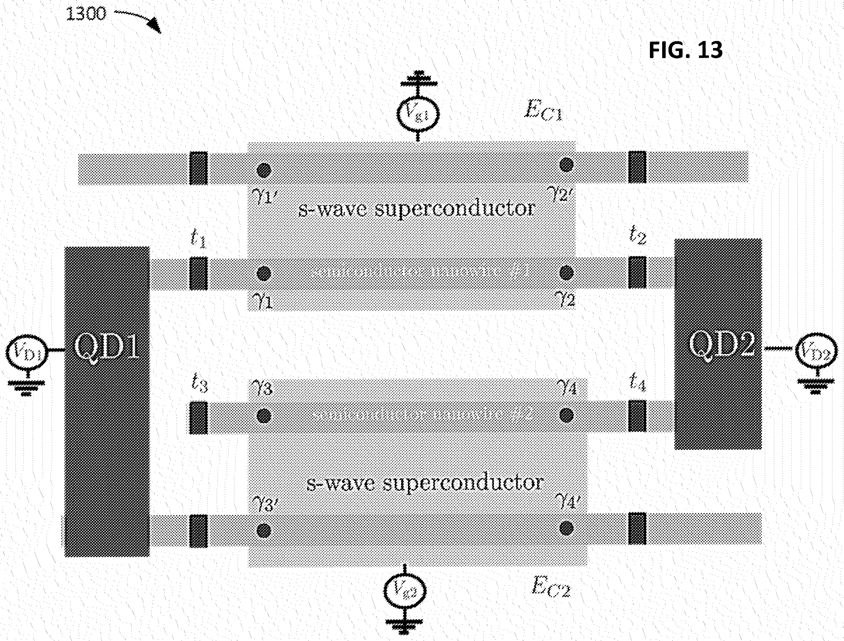

Figure 13 is a schematic layout 1300 of an example device for joint parity measurement. The layout 1300 can be used to generate ZX couplings. By measuring the energy shift in the dot, one perofrms a measurement of the joint fermion parity $\gamma_1\gamma_2\gamma_3\gamma_4$. Using the following encoding for fermion parities $p_1 = i\gamma_1\gamma_2$, $p_{1'} = i\gamma_1\gamma_{2'}$, $p_2 = i\gamma_3\gamma_4$, and $p_{2'} = i\gamma_3\gamma_{4'}$, the aforementioned measurement is equivalent to $Z_1X_2$ spin coupling. Using a scheme, one can also generate $X_1Z_2$ spin coupling.

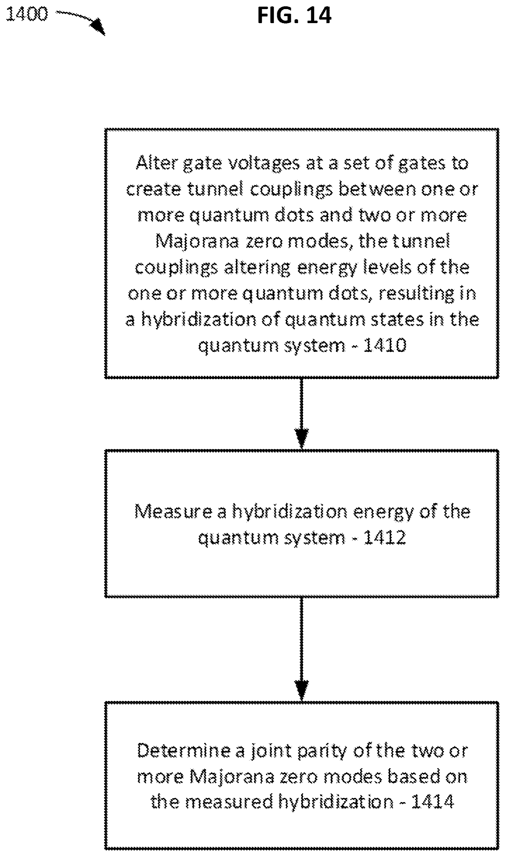

Figure 14 is a flowchart 1400 for operating a quantum system in accordance with embodiments of the disclosed technology. The illustrated embodiment should not be construed as limiting, as the disclosed method acts can, in some cases, be performed alone, in different orders, or at least partially simultaneously with one another. Further, any of the disclosed methods or method acts can be performed with any other methods or method acts disclosed herein.

At 1410, gate voltages at a set of gates are altered to create tunnel couplings between one or more quantum dots and two or more Majorana zero modes, the tunnel couplings altering energy levels of the one or more quantum dots, resulting in a hybridization of quantum states in the quantum system.

At 1412, a hybridization energy of the quantum system is measured.

At 1414, a joint parity of the two or more Majorana zero modes is determined based on the measured hybridization.

In certain implementations, the method can further comprise altering the gate voltages at the set of gates to decouple the one or more quantum dots from the two or more Majorana zero modes. In some implementations, the method can further comprise measuring respective charges of the one or more quantum dots.

In certain implementations, the method further comprises using the joint parity to implement the full set of Clifford gates in a quantum computer. Still further, the two or more Majorana zero modes are part of a phase gate in a quantum computer.

In some implementations, the measuring is performed using spectroscopy. In certain implementations, the measuring is performed using a microwave resonator. In further implementations, the measuring is performed by measuring quantum capacitance.

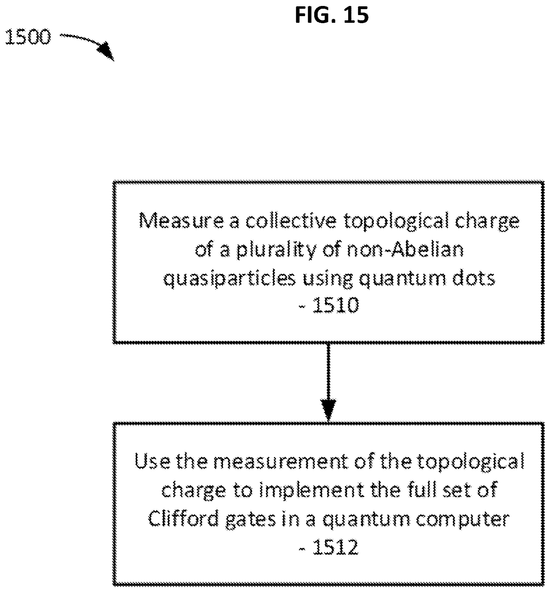

Figure 15 is a flowchart 1500 for operating a quantum system in accordance with embodiments of the disclosed technology. The illustrated embodiment should not be construed as limiting, as the disclosed method acts can, in some cases, be performed alone, in different orders, or at least partially simultaneously with one another. Further, any of the disclosed methods or method acts can be performed with any other methods or method acts disclosed herein.

At 1510, a collective topological charge of a plurality of non-Abelian quasiparticles using quantum dots is measured. In particular implementations, the non-Abelian quasiparticles are Majorana zero modes. Further, the measuring can comprise measuring a joint parity P of the Majorana zero modes using the quantum dots, the joint parity being the product of the topological charge of the plurality of the Majorana zero modes.

At 1512, the measurement of the topological charge is used to implement the full set of Clifford gates in a quantum computer.

In some implementations, a first and a second of the Majorana zero modes are implemented on a first superconducting island, and a third and a fourth of the Majorana zero modes are implemented on a second superconducting island separate from the first superconducting island. Further, in certain implementations, the measuring is performed using spectroscopy. In some implementations, the measuring is performed using a microwave resonator. In further implementations, the measuring is performed by measuring quantum capacitance.

Also disclosed herein are embodiments of a quantum-dot-supported topological quantum device that is quasiparticle-poisoning-protected.

In particular example implementations, the quantum device comprises: a first superconducting island on which one or more first-island nanowires are located, the one or more first-island nanowires including a first first-island nanowire having a first end and a second end distal to the first end; a second superconducting island on which one or more second-island nanowires are located, the one or more second-island nanowires including a first second-island nanowire having a first end and a second end distal to the first end; a first quantum dot having a first tunable quantum-tunneling coupling to the first end of the first first-island nanowire and a second tunable quantum-tunneling coupling to the first end of the first second-island nanowire; and a second quantum dot having a third tunable quantum-tunneling coupling to the second end of the first first-island nanowire and a fourth tunable quantum-tunneling coupling to the second end of the first second-island nanowire.

In other example implementations, the quantum device comprises: a first superconducting island on which two or more first-island nanowires are located, the two or more first-island nanowires including a first first-island nanowire having a first end and a second end distal to the first end, and a second first-island nanowire having a first end and a second end distal to the first end; a second superconducting island on which two or more second-island nanowires are located, including a first second-island nanowire having a first end and a second end distal to the first end, and a second second-island nanowire having a first end and a second end distal to the first end; a first quantum dot having a first tunable quantum-tunneling coupling to the second end of the first first-island nanowire and a second tunable quantum-tunneling coupling to the first end of the first second-island nanowire; and a second quantum dot having a third tunable quantum-tunneling coupling to the second end of the second first-island nanowire and a fourth tunable quantum tunneling coupling to the first end of the second second-island nanowire.

In further example implementations, the quantum device comprises: a first superconducting island on which one or more first-island nanowires are located, the one or more first-island nanowires including a first first-island nanowire having a first end and a second end distal to the first end; a second superconducting island on which two or more second-island nanowires are located, including a first second-island nanowire having a first end and a second end distal to the first end, and a second second-island nanowire having a first end and a second end distal to the first end; a first quantum dot having a first tunable quantum-tunneling coupling to the first end of the first first-island nanowire and a second tunable quantum-tunneling coupling to the first end of the second second-island nanowire; and a second quantum dot having a third tunable quantum-tunneling coupling to the second end of the first first-island nanowire and a fourth tunable quantum tunneling coupling to the second end of the first second-island nanowire.

In some implementations, the quantum device comprises: a first superconducting island on which two or more first-island Majorana zero modes are located; a second superconducting island on which two or more second-island Majorana zero modes are located; a first quantum dot comprising a first tunable quantum-tunneling coupling to any of the first-island Majorana zero modes and a second tunable quantum-tunneling coupling to any of the second-island Majorana zero modes; and a second quantum dot comprising a third tunable quantum-tunneling coupling to any of the first-island Majorana zero modes to which the first quantum dot is not also actively coupled and a fourth tunable quantum-tunneling coupling to any of the second-island Majorana zero modes to which the first quantum dot is not also actively coupled.

For any of these implementations, the first superconducting island and the second superconducting can have respective charging energies that are held constant during operation of the quantum device in order to reduce quasiparticle poisoning. Further, the first quantum dot and the second quantum dot can have respective adjustable quantum dot charges.

Also disclosed herein are quantum computers comprising the topological quantum device of any of the disclosed embodiments.

In certain embodiments, a quantum computer phase gate comprising a quantum-dot-supported quantum device that is quasiparticle-poisoning-protected is disclosed.

In some implementations of these embodiments, the quantum device comprises: a first superconducting island on which one or more first-island nanowires are located, the one or more first-island nanowires including a first first-island nanowire having a first end and a second end distal to the first end; a second superconducting island on which one or more second-island nanowires are located, the one or more second-island nanowires including a first second-island nanowire having a first end and a second end distal to the first end; a first quantum dot having a first tunable quantum-tunneling coupling to the first end of the first first-island nanowire and a second tunable quantum-tunneling coupling to the first end of the first second-island nanowire; and a second quantum dot having a third tunable quantum-tunneling coupling to the second end of the first first-island nanowire and a fourth tunable quantum-tunneling coupling to the second end of the first second-island nanowire.

In certain implementations, the quantum device comprises: a first superconducting island on which two or more first-island nanowires are located, the two or more first-island nanowires including a first first-island nanowire having a first end and a second end distal to the first end, and a second first-island nanowire having a first end and a second end distal to the first end; a second superconducting island on which two or more second-island nanowires are located, including a first second-island nanowire having a first end and a second end distal to the first end, and a second second-island nanowire having a first end and a second end distal to the first end; a first quantum dot having a first tunable quantum-tunneling coupling to the second end of the first first-island nanowire and a second tunable quantum-tunneling coupling to the first end of the first second-island nanowire; and a second quantum dot having a third tunable quantum-tunneling coupling to the second end of the second first-island nanowire and a fourth tunable quantum tunneling coupling to the first end of the second second-island nanowire.

In further implementations, the quantum device comprises: a first superconducting island on which one or more first-island nanowires are located, the one or more first-island nanowires including a first first-island nanowire having a first end and a second end distal to the first end; a second superconducting island on which two or more second-island nanowires are located, including a first second-island nanowire having a first end and a second end distal to the first end, and a second second-island nanowire having a first end and a second end distal to the first end; a first quantum dot having a first tunable quantum-tunneling coupling to the first end of the first first-island nanowire and a second tunable quantum-tunneling coupling to the first end of the second second-island nanowire; and a second quantum dot having a third tunable quantum-tunneling coupling to the second end of the first first-island nanowire and a fourth tunable quantum tunneling coupling to the second end of the first second-island nanowire.

For any of these implementations, the first superconducting island and the second superconducting can have respective charging energies that are held constant during operation of the quantum device in order to reduce quasiparticle poisoning. Further, the first quantum dot and the second quantum dot can have respective adjustable quantum dot charges.

## VI. CONCLUDING REMARKS

Further examples and details concerning the disclosed technology, as well as other architectures with which the disclosed technology can be used, are described in T. Karzig et al., "Scalable Designs for Quasiparticle-Poisoning-Protected Topological Quantum Computation with Majorana Zero Modes," arXiv:1610.05289 (March 2017) and T. Karzig et al., "Scalable Designs for Quasiparticle-Poisoning-Protected Topological Quantum Computation with Majorana Zero Modes," Phys. Rev. B 95, 235305 (2017), both of which are hereby incorporated herein by reference.

Having described and illustrated the principles of the disclosed technology with reference to the illustrated embodiments, it will be recognized that the illustrated embodiments can be modified in arrangement and detail without departing from such principles. In view of the many possible embodiments to which the principles of the disclosed invention may be applied, it should be recognized that the illustrated embodiments are only preferred examples of the invention and should not be taken as limiting the scope of the invention.

Aspects of the invention are disclosed in the following numbered clauses:

1. A two-sided Majorana Tetron qubit, comprising:

two topological superconducting nanowires, each of the topological superconducting nanowires having a respective first end at which a respective first Majorana zero mode resides and a respective second end, opposite the first respective end, where a respective second Majorana zero mode resides; and
a superconducting backbone element connected to the two topological superconducting nanowires,
the superconducting backbone element being located between the respective first ends and the respective second ends of the two topological superconductive nanowires.

2. The two-sided Majorana Tetron qubit of clause 1, wherein the superconducting backbone element is oriented transverse to the two topological superconducting nanowires.

3. The two-sided Majorana Tetron qubit of clause 1, wherein the two topological superconducting nanowires are half-shell topological wires or p-wave superconductors.

4. The two-sided Majorana Tetron qubit of clause 1, wherein the superconducting backbone element is an s-wave superconductor.

5. The two-sided Majorana Tetron qubit of clause 1, wherein the two topological superconducting nanowires are located on a superconducting island having a charging energy sufficient to prevent quasiparticle poisoning.

6. A network comprising multiple instances of the two-sided Majorana Tetron qubit of clause 1, wherein one or more neighboring instances of the linear Majorana Tetron qubit are selectively coupled to one another by one or more semiconductive wires having tunable depletion gates configured to provide quantum-dot couplings between the neighboring instances, and wherein the one or more neighboring instances of the two-sided Majorana Tetron qubit are neighboring along a horizontal direction, a vertical direction, or both.

7. A method comprising:

generating Clifford operations in a quantum computer from measurements of four Majorana zero modes, wherein the Clifford operations comprise all Clifford operations so as to provide a computationally universal gate set for a quantum device or quantum computer once augmented by an additional rotation, and wherein the four Majorana zero modes measured are resident in the two-sided Majorana Tetron qubit of clause 1.

8. A linear Majorana Tetron qubit, comprising:
a topological superconducting nanowire partitioned into regions, including:

two MZM topological superconducting regions, each having a respective first end at which a respective first Majorana zero mode resides and a respective second end, opposite the first respective end, where a respective second Majorana zero mode resides; and
an s-wave superconducting region that separates the two MZM topological superconducting regions from one another.

9. The linear Majorana Tetron qubit of clause 8, wherein the s-wave superconducting region is created by gating junctions between the two MZM topological superconducting regions and the s-wave superconducting region.

10. The linear Majorana Tetron qubit of clause 8, wherein the topological superconducting nanowire is located on a superconducting island having a charging energy sufficient to prevent quasiparticle poisoning.

11. A network comprising two or more instances of the linear Majorana Tetron qubit of clause 8, wherein one or more neighboring instances of the linear Majorana Tetron qubit are selectively coupled to one another by semiconductive wires having tunable depletion gates configured to provide quantum-dot couplings between the neighboring instances, and wherein the one or more neighboring instances of the linear Majorana Tetron qubit are neighboring along a horizontal direction, a vertical direction, or both.

12. The network of clause 11, further comprising one or more intermediate topological superconducting nanowires interposed between the two or more instances of the linear Majorana Tetron qubit, each of the one or more intermediate topological superconducting nanowires having a respective first end at which a respective first Majorana zero mode resides and a respective second end, opposite the first respective end, where a respective second Majorana zero mode resides.

13. The network of clause 12, wherein the intermediate topological superconducting nanowires are coupled to the semiconductive wires.

14. A method comprising:

generating Clifford operations from measurements of four Majorana zero modes, wherein the four Majorana zero modes measured are resident in the linear Majorana Tetron qubit of clause 8, wherein the Clifford operations comprise all Clifford operations so as to provide a computationally universal gate set for a quantum device or quantum computer once augmented by an additional approximate rotation.

15. A symmetry-protected-topological and quasiparticle-poisoning-protected Majorana Tetron qubit.

**Claims**

1.  A quantum computer system comprising:
    a linear Majorana Tetron qubit, the linear Majorana Tetron qubit comprising:
    a one-dimensional topological superconductor partitioned into regions, including:

    two Majorana zero mode topological superconducting regions, each having a respective first end at which a respective first Majorana zero mode resides and a respective second end, opposite the first respective end, where a respective second Majorana zero mode resides; and
    an s-wave superconducting region that separates the two Majorana zero mode topological superconducting regions from one another, wherein the topological superconducting regions and the s-wave superconducting region are sufficiently long compared to a respective coherence length in the topological superconducting regions and the s-wave superconducting region.

2.  A quantum computer system according to claim 1, wherein a plurality of mesoscopic superconducting islands each host a said linear Majorana Tetron qubit comprising four Majorana zero modes, and wherein the quantum computing system further comprises means for performing joint parity measurement of two Majorana zero modes from one linear Majorana Tetron qubit and two Majorana zero modes from another linear Majorana Tetron qubit to generate all n-qubit Clifford operations with topological protection.

3.  The quantum computer system of claim 1, wherein the s-wave superconducting region is created by gating junctions between the two MZM topological superconducting regions and the s-wave superconducting region.

4.  The quantum computer system of claim 1, wherein the one-dimensional topological superconductor is located on a superconducting island having a charging energy sufficient to prevent quasiparticle poisoning, wherein the quantum computer system further comprises tunable depletion gates and wherein a charge on the superconducting island is tunable by one or more gate voltages of the tunable depletion gates.

5.  A network comprising two or more instances of a linear Majorana Tetron qubit according to claim 1, wherein one or more neighboring instances of the linear Majorana Tetron qubit are selectively coupled to one another by semiconductive wires having tunable depletion gates configured to provide quantum-dot couplings between the neighboring instances, and wherein the one or more neighboring instances of the linear Majorana Tetron qubit are neighboring along a horizontal direction, a vertical direction, or both.

6.  The network of claim 5, further comprising one or more intermediate topological superconducting nanowires interposed between the two or more instances of the linear Majorana Tetron qubit, each of the one or more intermediate topological superconducting nanowires having a respective first end at which a respective first Majorana zero mode resides and a respective second end, opposite the first respective end, where a respective second Majorana zero mode resides.

7.  A quantum computer implemented method comprising:

    generating Clifford operations from joint parity measurements of four Majorana zero modes, wherein the four Majorana zero modes measured are resident in the linear Majorana Tetron qubit of the quantum computer system of claim 1,
    wherein the Clifford operations comprise all Clifford operations so as to provide a computationally universal gate set for a quantum device or quantum computer once augmented by an additional approximate rotation.

8.  A symmetry-protected-topological and quasiparticle protected linear Majorana Tetron qubit for use in a quantum computer system as claimed in claim 1, the linear Majorana Tetron qubit comprising a mesoscopic superconducting island hosting the four Majorana zero modes and having a charging energy large enough to protect the Majorana zero modes it contains from quasiparticle poisoning, wherein a charge on the mesoscopic superconducting island is tunable via one or more gate voltages of depletion gates to which the mesoscopic island is configured to be connected, wherein a computational qubit is encoded in the topological state space of the four Majorana zero modes by the joint fermionic parity of pairs of the Majorana zero modes.

FIG. 1

**Legend:**
- ▨ S-wave Superconductor ("s-wave")
- ▨ ½ Shell Topological Wire or P-wave Superconductor ("Top")
- X Majorana Zero Mode (MZM)
- ▮ Quantum Dot

EP 4 660 901 A2

200

**FIG. 2**

Legend:
- S-wave Superconductor ("s-wave")
- ½ Shell Topological Wire or P-wave Superconductor ("Top")
- X Majorana Zero Mode (MZM)

300 →

S- wave Superconductor ("swave")

Semiconductor (SiGe) ("sc")

½ Shell Topological Wire or-Pwave Superconductor ("Top")

X   Majorana Zero Mode (MZM)

**FIG. 3**

FIG. 4

FIG. 5

EP 4 660 901 A2

**FIG. 6**

## FIG. 7

## FIG. 8

FIG. 9

FIG. 10

**FIG. 11**

# FIG. 12

FIG. 13

1400 ⟍

**FIG. 14**

Alter gate voltages at a set of gates to create tunnel couplings between one or more quantum dots and two or more Majorana zero modes, the tunnel couplings altering energy levels of the one or more quantum dots, resulting in a hybridization of quantum states in the quantum system - 1410

Measure a hybridization energy of the quantum system - 1412

Determine a joint parity of the two or more Majorana zero modes based on the measured hybridization - 1414

**FIG. 15**

1500

```
┌─────────────────────────────────────┐
│                                       │
│   Measure a collective topological    │
│   charge of a plurality of non-Abelian│
│   quasiparticles using quantum dots   │
│              - 1510                    │
│                                       │
└─────────────────────────────────────┘
                    │
                    ▼
┌─────────────────────────────────────┐
│                                       │
│  Use the measurement of the topological│
│   charge to implement the full set of │
│   Clifford gates in a quantum computer│
│              - 1512                    │
│                                       │
└─────────────────────────────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62376386 A
- US 62378218 A
- US 62382253 A
- US 62385245 A
- US 63498317 A
- US 63637617 A
- US 63645717
- US 8209279 B

### Non-patent literature cited in the description

- *Phys. Rev. B*, 2013, vol. 87, 195451
- *Phys. Rev. B*, 2016, vol. 93, 235434
- *Phys. Rev. A*, 2005, vol. 71, 022316
- *Phys. Rev. X*, 2016, vol. 6, 31019
- **E. KNILL**. Quantum computing with realistically noisy devices. *Nature (London)*, 2005, vol. 434, 39
- **J. PRESKILL**. *Lecture notes for physics 219: quantum computation*, 2004
- **S. BRAVYI**; **J. HAAH**. Magic state distillation with low overhead. *Phys. Rev. A*, 2012, vol. 86, 052329
- **D. GOTTESMAN**. Theory of fault-tolerant quantum computation. *Phys. Rev. A*, 1998, vol. 57, 127
- **J. SHABANI et al.** Two-dimensional epitaxial superconductor-semiconductor heterostructures: A platform for topological superconducting networks. *Phys. Rev. B*, 2016, vol. 93, 155402
- *Phys. Rev. B*, 2013, vol. 88, 035121
- **H. SUOMINEN et al.** Scalable Majorana Devices. *arxiv:1703.03699*
- **PETERSSON et al.** *Nano Lett.*, 2010, vol. 10, 2789
- **COLLESS et al.** *Phys. Rev. Lett.*, 2013, vol. 110, 46805
- *Phys. Rev. Lett.*, 2008, vol. 101, 010501
- *Annals Phys.*, 2009, vol. 324, 787-826
- *Phys. Rev. Lett.*, 2010, vol. 105, 077001
- *Phys. Rev. Lett.*, vol. 105, 177002
- *Phys. Rev. Lett.*, 2010, vol. 104, 056402
- **T. KARZIG et al.** Scalable Designs for Quasiparticle-Poisoning-Protected Topological Quantum Computation with Majorana Zero Modes. *arXiv:1610.05289*, March 2017
- **T. KARZIG et al.** Scalable Designs for Quasiparticle-Poisoning-Protected Topological Quantum Computation with Majorana Zero Modes. *Phys. Rev. B*, 2017, vol. 95, 235305
- **R. M. LUTCHYN**; **J. D. SAU**; **S. DAS SARMA**. *Phys. Rev. Lett.*, 2010, vol. 105, 077001
- **Y. OREG**; **G. REFAEL**; **F. VON OPPEN**. *Phys. Rev. Lett.*, 2010, vol. 105, 177002
- **A. Y. KITAEV**. *Physics-Uspekhi*, 2001, vol. 44, 131